# EUROPEAN PATENT APPLICATION

(11) **EP 4 694 213 A1**
(43) Date of publication of application: **11.02.2026**
(21) Application number: 24784444.2
(22) Date of filing: 07.04.2024
(51) Int. Cl.: H04W 4/02

(54) **EVENT REPORTING METHOD AND APPARATUS, DEVICE, AND STORAGE MEDIUM**

(30) Priority: 06.04.2023 CN 202310366782
(71) Applicant: Vivo Mobile Communication Co., Ltd., Dongguan, Guangdong 523863 (CN)
(72) Inventor: YU, Hang, Dongguan, Guangdong 523863 (CN); ZHANG, Di, Dongguan, Guangdong 523863 (CN)
(74) Representative: Walaski, Jan Filip
(86) International application number: PCT/CN2024/086448
(87) International publication number: WO 2024/208363

(57) **Abstract**

The present application relates to the technical field of communications, and discloses an event reporting method and apparatus, a device, and a storage medium. The event reporting method in embodiments of the present application comprises: a terminal sends first information, wherein the first information is used for indicating related information of event reporting performed by the terminal in an area other than a first area, and the first area is an area where the terminal is allowed to perform event reporting; the terminal receives an event reporting configuration information matching the first information; and the terminal performs event reporting according to the event reporting configuration information.

## Description

### CROSS-REFERENCE TO RELATED APPLICATIONS

The present application claims priority to Chinese Patent Application No. 202310366782.X, filed with the China National Intellectual Property Administration on April 6, 2023 and entitled "EVENT REPORTING METHOD AND APPARATUS, DEVICE, AND STORAGE MEDIUM", which is incorporated herein by reference in its entirety.

### TECHNICAL FIELD

The present application pertains to the field of communication technologies, and particularly, to an event reporting method and apparatus, a device, and a storage medium.

### BACKGROUND

For location service prior to R18, a third-party application (LCS client) requests a network side to obtain an event report (event report) of UE when an event requirement (including a periodic, area-based, or motion-based requirement) is met.

Currently, for event reports, R18 has introduced event report allowed area. That is, UE may report an area, indicating that the UE reports its location only when within that area (that area is referred to as a power saving area). GMLC determines an event report allowed area based on the power saving area, typically converting a fine-grained area into a coarse-grained one, for example, converting a rectangular area (that is, an area defined by coordinate points) into a tracking area (Tracking Area, TA) or a cell (cell) list. Therefore, the current usage of the event report allowed area is such that UE performs event reporting only when the UE is within the event report allowed area.

However, whether UE can perform event reporting when outside the event report allowed area has not yet been provided with a feasible solution.

### SUMMARY

Embodiments of the present application provide an event reporting method and apparatus, a device, and a storage medium to provide a terminal with a method of performing event reporting outside an event report allowed area.

According to a first aspect, an event reporting method is provided, where the method includes:
sending, by a terminal, first information, where the first information is used for indicating related information about the terminal performing event reporting outside a first area, the first area being an area in which the terminal is allowed to perform event reporting;
receiving, by the terminal, event reporting configuration information matching the first information; and
performing, by the terminal, event reporting based on the event reporting configuration information.

According to a second aspect, an event reporting method is provided, where the method includes:
acquiring, by a first network-side device, first information of a terminal, where the first information is used for indicating related information about the terminal performing event reporting outside a first area, the first area being an area in which the terminal is allowed to perform event reporting;
acquiring, by the first network-side device, event reporting configuration information matching the first information; and
sending, by the first network-side device, the reporting configuration information to the terminal.

According to a third aspect, an event reporting apparatus is provided and includes:
a first sending module configured to send first information, where the first information is used for indicating information related to a terminal performing event reporting outside a first area, the first area being an area in which the terminal is allowed to perform event reporting;
a first receiving module configured to receive event reporting configuration information matching the first information; and
a first processing module configured to perform event reporting based on the event reporting configuration information.

According to a fourth aspect, an event reporting apparatus is provided and includes:
a first acquiring module configured to acquire first information of a terminal, where the first information is used for indicating related information about the terminal performing event reporting outside a first area, the first area being an area in which the terminal is allowed to perform event reporting;
a second acquiring module configured to acquire event reporting configuration information matching the first information; and
a second sending module configured to send the reporting configuration information to the terminal.

According to a fifth aspect, a terminal is provided, where the terminal includes a processor and a memory, the memory stores a program or an instruction capable of running on the processor, and when the program or instruction is executed by the processor, the steps of the method according to the first aspect are implemented.

According to a sixth aspect, a network-side device is provided, where the network-side device includes a processor and a memory, the memory stores a program or an instruction capable of running on the processor, and when the program or instruction is executed by the processor, the steps of the method according to the second aspect are implemented.

According to a seventh aspect, a terminal is provided and includes a processor and a communication interface, where the communication interface is configured to send first information, and the first information is used for indicating related information about the terminal performing event reporting outside a first area, the first area being an area in which the terminal is allowed to perform event reporting; where
the communication interface is further configured to receive event reporting configuration information matching the first information; and
the processor is configured to perform event reporting based on the event reporting configuration information.

According to an eighth aspect, a network-side device is provided and includes a processor and a communication interface, where the communication interface is configured to acquire first information of a terminal, and the first information is used for indicating related information about the terminal performing event reporting outside a first area, the first area being an area in which the terminal is allowed to perform event reporting; where
the processor is configured to acquire event reporting configuration information matching the first information; and
the communication interface is further configured to send the reporting configuration information to the terminal.

According to a ninth aspect, a readable storage medium is provided, where the readable storage medium stores a program or an instruction, and when the program or instruction is executed by a processor, the steps of the method according to the first aspect or the steps of the method according to the second aspect are implemented.

According to a tenth aspect, a wireless communication system is provided and includes a terminal and a network-side device, the terminal being configured to perform the steps of the method according to the first aspect, and the network-side device being configured to perform the steps of the method according to the second aspect.

According to an eleventh aspect, a chip is provided, where the chip includes a processor and a communication interface, the communication interface being coupled to the processor, and the processor being configured to run a program or an instruction to implement the method according to the first aspect or the method according to the second aspect.

According to a twelfth aspect, a computer program/program product is provided, where the computer program/program product is stored in a storage medium, and the program/program product is executed by at least one processor to implement the steps of the event reporting method according to the first aspect or the second aspect.

According to a thirteenth aspect, an embodiment of the present application provides an event reporting apparatus, where the apparatus is configured to perform the steps of the event reporting method according to the first aspect or the second aspect.

In the embodiments of the present application, the terminal can send the first information to the first network-side device, enabling the first network-side device to acquire the event reporting configuration information matching the first information and send the event reporting configuration information to the terminal. In this way, the terminal can perform event reporting based on the event reporting configuration information. The first information is used for indicating the related information about the terminal performing event reporting outside the first area, the first area (that is, event report allowed area) being an area in which the terminal is allowed to perform event reporting. Thus, it can be learned that in the embodiment of the present application, the terminal can report to the first network-side device information related to performing event reporting outside the event report allowed area (that is, the first information). This enables the first network-side device to configure appropriate event reporting configuration information for the terminal based on the related information, thereby allowing the terminal to perform more suitable event reporting outside the event report allowed area. Therefore, the embodiments of the present application provide a terminal with a method of performing event reporting outside an event report allowed area.

### BRIEF DESCRIPTION OF DRAWINGS

FIG. 1 is a block diagram of a wireless communication system applicable to an embodiment of the present application;
FIG. 2 is a schematic diagram of an architecture for implementing a location service;
FIG. 3 is a schematic flowchart of a mobile terminated location request (Mobile Terminated Location Request, MT-LR) procedure;
FIG. 4 is a flowchart of an event reporting method according to an embodiment of the present application;
FIG. 5 is a schematic diagram of determining an event report allowed area based on power saving in an embodiment of the present application;
FIG. 6 is a schematic diagram of "forward usage" and "reverse usage" in an embodiment of the present application;
FIG. 7 is a flowchart of another event reporting method according to an embodiment of the present application;
FIG. 8 is a schematic flowchart of a first specific implementation of an event reporting method according to an embodiment of the present application;
FIG. 9 is a schematic flowchart of a second specific implementation of an event reporting method according to an embodiment of the present application;
FIG. 10 is a schematic flowchart of a third specific implementation of an event reporting method according to an embodiment of the present application;
FIG. 11 is a schematic flowchart of a fourth specific implementation of an event reporting method according to an embodiment of the present application;
FIG. 12 is a structural block diagram of an event reporting apparatus according to an embodiment of the present application;
FIG. 13 is a structural block diagram of another event reporting apparatus according to an embodiment of the present application;
FIG. 14 is a structural block diagram of a communication device according to an embodiment of the present application;
FIG. 15 is a structural block diagram of a terminal according to an embodiment of the present application; and
FIG. 16 is a structural block diagram of a network-side device according to an embodiment of the present application.

### DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application fall within the protection scope of the present application.

The terms "first", "second", and the like in the present application are used to distinguish between similar objects instead of describing a specific order or sequence. It should be understood that terms used in this way are interchangeable in appropriate circumstances such that the embodiments of the present application can be implemented in other orders than the order illustrated or described herein. In addition, objects distinguished by "first" and "second" are generally of a same type, and the quantities of the objects are not limited, for example, there may be one or more first objects. In addition, "and/or" in the present application represents at least one of connected objects. For example, "A or B" covers three scenarios: scenario one, including A but not B; scenario two, including B but not A; scenario three, including both A and B. The character "/" in this specification generally represents an "or" relationship between the associated objects.

The term "indication" in the present application can be either a direct indication (or explicit indication) or an indirect indication (or implicit indication). The direct indication can be understood as a sender explicitly informing a receiver of specific information, an operation to be performed, a request result, or the like in a sent indication. The indirect indication can be understood as a receiver determining corresponding information based on an indication sent by a sender, or performing determining based on an indication sent by a sender and determining an operation to be performed or a request result based on the determining result.

It should be noted that technologies described in the embodiments of the present application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system application, for example, the 6^{th} generation (6^{th} Generation, 6G) communication system.

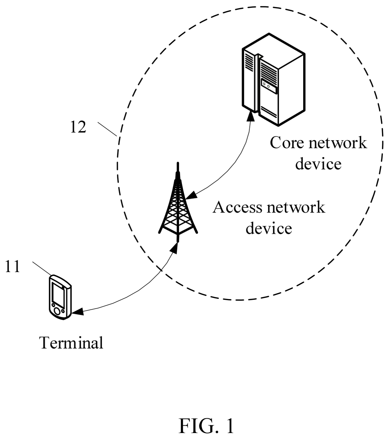

FIG. 1 is a block diagram of a wireless communication system to which the embodiments of the present application can be applied. The wireless communications system includes a terminal 11 and a network-side device 12. The terminal 11 can be a mobile phone, tablet personal computer (Tablet Personal Computer), laptop computer (Laptop Computer), notebook computer, personal digital assistant (Personal Digital Assistant, PDA), handheld computer, netbook, ultra-mobile personal computer (Ultra-mobile Personal Computer, UMPC), mobile internet device (Mobile Internet Device, MID), augmented reality (Augmented Reality, AR) device, virtual reality (Virtual Reality, VR) device, robot, wearable device (Wearable Device), flight vehicle (flight vehicle), vehicle user equipment (Vehicle User Equipment, VUE), onboard maritime device, pedestrian user equipment (Pedestrian User Equipment, PUE), smart home (wireless communication-enabled home devices such as a refrigerator, television, washing machine, or furniture), game console, personal computer (Personal Computer, PC), automated teller machine, self-service terminal, or another terminal-side device. The wearable device includes: a smartwatch, a smart band, smart earphones, smart glasses, smart jewelry (such as a smart bracelet, smart bangle, smart ring, smart necklace, smart anklet, or smart foot chain), a smart wristband, smart clothing, and the like. The vehicle user equipment may also be referred to as a vehicle terminal, vehicle controller, vehicle module, vehicle component, vehicle chip, or vehicle unit. It should be noted that the terminal 11 is not limited to a specific type in the embodiments of the present application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or any other suitable term in the field, as long as the same technical effect is achieved. The base station is not limited to a specific technical term. It should be noted that, in the embodiments of the present application, only a base station in an NR system is used as an example for description, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in the embodiments of the present application, the core network equipment in the NR system is only taken as an example, and the specific type of the core network equipment is not limited, and is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in the embodiments of the present application, the core network equipment in the NR system is only taken as an example, and the specific type of the core network equipment is not limited.

To facilitate understanding of the event reporting method in the embodiments of the present application, the following related technologies are described:

### I. Location service (Location Service, LCS)

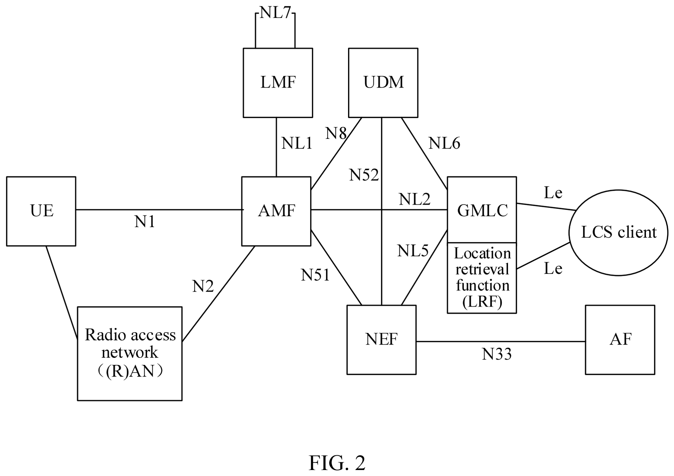

As shown in FIG. 2, a location service is executed and provided by network elements such as an AMF and a location management function (Location Management Function, LMF) in a core network. LCS messages are exchanged between UE and an LCS entity (client) or AF, and a typical process is an MT-LR procedure.

The MT-LR procedure is initiated by an external third-party application (LCS client) or by an AF via an NEF network element, and location information of UE is finally obtained via network elements such as a gateway mobile location centre (Gateway Mobile Location Centre, GMLC), an AMF, and an LMF.

N1, N2, N51, N33, N52, N8, NL1, NL2, NL5, NL6, NL7, and Le in FIG. 2 represent different interfaces, respectively.

### II. MT-LR procedure

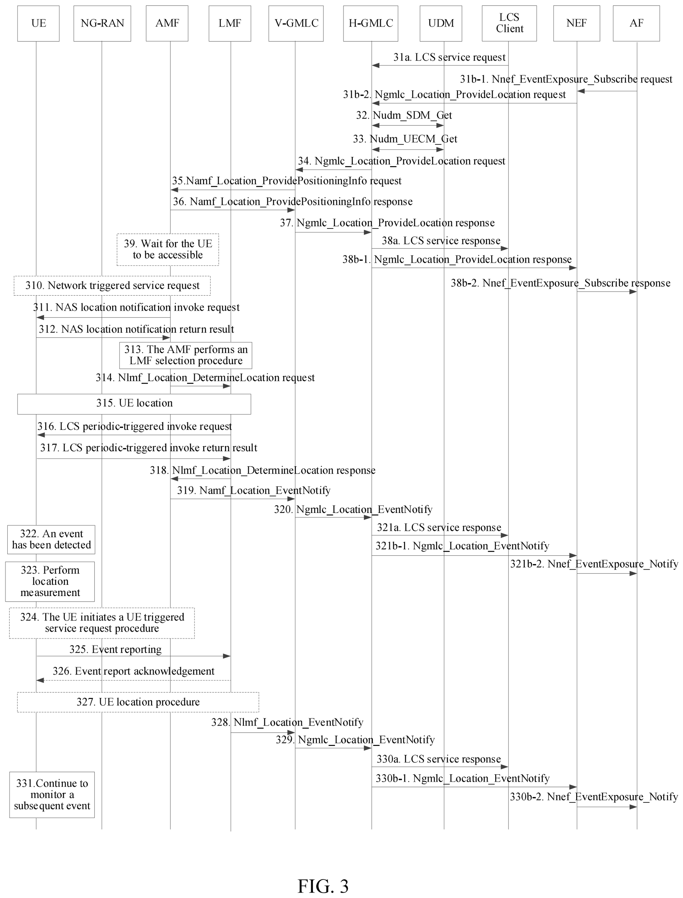

As shown in FIG. 3, it specifically includes the following steps 31 to 331:

Step 31a: An LCS client sends an LCS service request (LCS Service Request) message to a home gateway mobile location centre (Home Gateway Mobile Location Centre, H-GMLC).

Step 31b-1: An AF sends an NEF network element event exposure subscription request message (Nnef_EventExposure_Subscribe Request) to an NEF.

Step 31b-2: The NEF sends a GMLC network element location provision request message (Ngmlc_Location_ProvideLocation Request) to an H-GMLC.

That is, the LCS client or AF accesses the H-GMLC through the NEF and initiates a service request to an LCS system to request a periodic or triggered location report. In the request, the LCS client carries the category of the periodic or triggered location report and related parameters. The category includes UE availability (availability), area (area), periodic location (periodic location), and motion (motion).

For area-based event reporting, the LCS service request message carries: detailed information of geographic area, whether to report when the UE enters, stays in, or leaves the area, the duration of reporting, an interval between two successful reportings, a maximum sampling interval, whether a location estimate is carried in a report message, and whether one or multiple reportings are needed. If a target area is represented as local location coordinates or a geographic name, the H-GMLC converts the target area into a geographic area expressed in a shape.

Step 32: The H-GMLC interacts a UDM network element subscription data management request message (Nudm_SDM_Get) with a UDM, that is, the H-GMLC confirms privacy check of the UE and obtains changes in UE privacy information in a timely manner by obtaining an update to the UE privacy information from the UDM.

Step 33: The H-GMLC interacts a UDM network element UE context management request message (Nudm_UECM_Get) with the UDM, that is, the H-GMLC obtains an address of the AMF from the UDM.

Step 34: The H-GMLC sends a location request (Ngmlc_Location_ProvideLocation Request) to a visited gateway mobile location centre (Visited Gateway Mobile Location Centre, V-GMLC), where if the UE is served by the H-GMLC, this step can be skipped.

Step 35: The H-GMLC or V-GMLC initiates a location request to a serving AMF (for example, the V-GMLC sends an AMF network element location providing request message (Namf_Location_ProvidePositioningInfo Request) to the AMF). For area-based event reporting, target geographic areas are mapped to a list of cell or TA identifiers.

Step 36: The AMF sends an AMF network element location providing response message (Namf_Location_ProvidePositioningInfo Response) to the V-GMLC.

Step 37: The V-GMLC sends a GMLC network element location providing response message (Ngmlc_Location_ProvideLocation Response) to the H-GMLC.

Step 38a: The H-GMLC sends an LCS service response (LCS Service Response) to the LCS client.

Step 38b-1: The H-GMLC sends the GMLC network element location providing response message (Ngmlc_Location_ProvideLocation Response) to the NEF.

Step 38b-2: The NEF sends an NEF network element event exposure subscription response message (Nnef_EventExposure_Subscribe Response) to the AF.

From the above steps 36-38, if the AMF supports the above periodic or triggered deferred location reporting, the AMF returns an acknowledgment to the LCS client or AF.

Step 39: The AMF waits for the UE to be accessible, that is, if the UE is currently unavailable, for example, it uses extended-discontinuous reception parameters (Extended-Discontinuous Reception, eDRX), the AMF waits for the UE to become available.

Step 310: The AMF triggers a network triggered service request (Network Triggered Service Request), that is, until the UE is available, and if the UE is in a connection management-IDLE (connection management-IDLE, CM-IDLE) state, the AMF initiates a network triggered location request procedure to establish a signaling connection between the UE and the network side.

Step 311: The AMF sends a NAS location notification invoke request (NAS Location Notification Invoke Request) to the UE.

Step 312: The UE sends a NAS location notification return result (NAS Location Notification Return Result) to the AMF.

That is, through steps 311 and 312, the AMF informs the UE of the location request and related privacy check requirements, the category of periodic or triggered location reports, and other information.

Step 313: The AMF performs an LMF selection procedure, that is, selects an LMF to perform a deferred location request task.

Step 314: The AMF sends an LMF network element location determining request message (Nlmf Location DetermineLocation Request) to the selected LMF, that is, the AMF sends the request message to the LMF to determine a deferred location. For all types of events, this message carries an LCS correlation identifier, an AMF identifier, a serving cell identifier, and a client (client) type, and may carry indication information to indicate: the UE supports long term evolution positioning protocol (long term evolution positioning protocol, LPP) messages, desired quality of service (Quality of Service, QoS) of positioning, and geographic area description type.

Step 315: Perform UE positioning, that is, the LMF performs one or more location procedures to request and obtain the UE's location.

Step 316: The LMF sends an LCS periodic-triggered invoke request message (LCS Periodic-Triggered Invoke Request) for location to the UE, that is, for deferred location reporting, the LMF sends a supplementary LCS periodic or triggered request to the UE through the serving AMF, where the request carries the location request message obtained by the LMF from the AMF in step 314, informing the UE to subsequently perform the corresponding deferred periodic or triggered location reporting.

Step 317: The UE sends an LCS periodic-triggered invoke return message (LCS Periodic-Triggered Invoke Return) for location to the LMF, that is, if the UE supports the request in step 316, the UE returns an acknowledgment message to the LMF.

Step 318: The LMF sends an LMF network element location providing response message (Nlmf_Location_DetermineLocation Response) to the AMF.

Step 319: The AMF sends an AMF network element location event notification message (Namf_Location_EventNotify) to the V-GMLC.

Step 320: The V-GMLC sends a GMLC network element location event notification message (Ngmlc_Location_EventNotify) to the H-GMLC.

Step 321a: The H-GMLC sends an LCS service response (LCS Service Response) to the LCS client.

Step 321b-1: The H-GMLC sends a GMLC network element location event notification message (Ngmlc_Location_EventNotify) to the NEF.

Step 321b-2: The NEF sends an NEF network element event exposure notification message (Nnef_EventExposure_Notify) to the AF.

That is, through steps 318-21, if the UE supports the request, the LMF informs the LCS client of this information through the AMF and GMLC, where this information may include UE positioning capabilities and other information.

Step 322: Detect an event, that is, if the periodic-triggered location request in steps 316 and 317 succeeds, the UE monitors the occurrence of the event requested in step 316. For an area event or a motion event, the UE performs monitoring at time intervals equal to or less than a maximum event sampling interval.

When any of the following situations occurs, the UE triggers event reporting:
(1) a requested area event or motion event has been detected, and a minimum reporting time interval has elapsed since the last reporting (if this is not the first event reporting);
(2) a required periodic event has occurred; and
(3) a maximum reporting time for an area event or a motion event has elapsed.

When it is detected that an event has been triggered, and if the UE resides in or is connected to an access type allowed by the LMF in step 316, the UE continues to perform step 323. If the UE cannot access the allowed access type, the UE may skip reporting the triggered event, or report, according to requirements received from the LMF in step 316, the triggered event when the allowed access type becomes available.

Step 323: Perform positioning measurement, that is, the UE obtains positioning measurement information, or location estimation information requested or allowed in step 316.

Step 324: The UE initiates a UE triggered service request (UE Triggered Service Request) procedure, that is, if the UE is in a CMM idle state, the UE performs a service request procedure to establish an N1 signaling connection with the AMF.

Step 325: The UE sends an event report to the LMF, that is, the UE sends a supplementary event reporting message to the AMF corresponding to the LMF, where the message is finally delivered to the LMF, and the AMF transparently transmits this message. This message may carry an event type and an embedded LPP message carrying location estimation information.

Step 326: The LMF sends an event report acknowledgment to the UE, that is, the LMF accepts and processes the event reporting, the LMF updates a status of the event reporting (for example, the reporting count so far, and a reporting duration), and returns an acknowledgment message to the UE.

Step 327: Perform a UE location procedure, that is, if the event reporting requires location estimation information, the LMF may perform one or more location procedures. The LMF determines a location of the UE by using at least one of measurement information or location estimation, and timestamp information is also determined herein.

Step 328: The LMF sends Nlmf Location EventNotify to the V-GMLC.

Step 329: The V-GMLC sends Ngmlc_Location_EventNotify to the H-GMLC.

Step 330a: The H-GMLC sends LCS Service Response to the LCS client.

Step 330b-1: The H-GMLC sends Ngmlc_Location_EventNotify to the NEF.

Step 330b-2: The NEF sends Nnef_EventExposure_Notify to the AF.

That is, in steps 328-330, the LMF performs event reporting to the LCS client through the GMLC, to report the UE location to the LCS client.

### 31. The UE continues to monitor a subsequent event.

The event reporting method provided in the embodiments of the present application is described in detail below with reference to the accompanying drawings through some embodiments and application scenarios thereof.

According to a first aspect, referring to FIG. 1, an embodiment of the present application provides an event reporting method, where the method may include the following steps 401 to 403:

Step 401: A terminal sends first information.

The first information is used for indicating related information about the terminal performing event reporting outside a first area, the first area being an area in which the terminal is allowed to perform event reporting, that is, the first area is the event report allowed area as described above. Optionally, the terminal performing event reporting when outside the first area may specifically be: the terminal performing conditional event reporting when outside the first area. Here, a constraint for implementing the conditional event reporting may be a constraint indicated by a reporting policy configured on a network side.

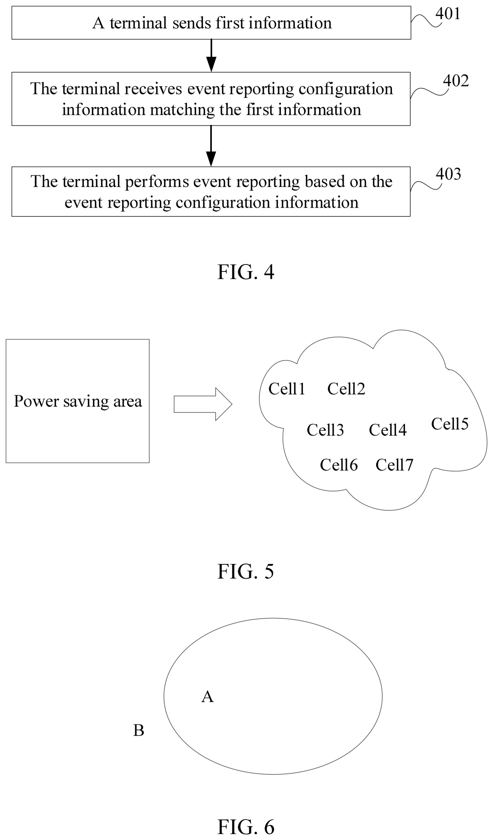

In addition, in the embodiments of the present application, the terminal may report a power saving area (used for indicating that the terminal performs event reporting in the area) to the network side, and the network side may determine an event report allowed area based on the power saving area: generally, a fine-grained area is converted into a coarse-grained one, for example, a rectangular area is converted into a TA list or a cell list, as shown in FIG. 5.

In addition, the first information is used for indicating the related information about the terminal performing event reporting when outside the first area, that is, the first information is used for indicating at least one of related parameter information, capability, or whether to report for the terminal to perform event reporting when outside the first area.

Optionally, the first information includes at least one of the following items A-1 to A-3:
Item A-1: A second area, where the second area is used for indicating an area in which event reporting is expected to perform by the terminal.
Item A-2: A reporting indication (that is, Power saving class), where the reporting indication is used for indicating whether the terminal supports performing event reporting when outside the first area, or indicating whether the terminal performs event reporting when outside the first area, or indicating at least one level related to the terminal performing event reporting when outside the first area.
Item A-3: An area usage indication (area usage indication), where the area usage indication is used for indicating forward usage of the first area or reverse usage of the first area.

In item A-1, the second area is the power saving area, which serves as a basis for the network side to determine the event report allowed area.

For item A-2, the reporting indication may have the following three understandings:
Understanding one: represents a capability of the terminal, indicating whether the terminal supports performing event reporting when outside the first area.

Understanding two: indicates whether the terminal performs event reporting when outside the first area, that is, an indication that the terminal performs event reporting when outside the first area. In this understanding, a specific implementation may be: the reporting indication has two values, 0 indicating not performing event reporting, and 1 indicating performing conditional event reporting.

Understanding three: indicates a level at which the terminal performs event reporting when outside the first area, that is, indicates a power saving level of the terminal. In this understanding, a specific implementation may be as follows:

In one implementation, the reporting indication may indicate two levels: high (high) and low (low) to indicate whether the terminal performs event reporting when outside the first area, where high indicates not performing event reporting, and low indicates performing conditional event reporting.

Another implementation may be applicable to area-based event reporting. For example, the reporting indication may indicate a first level (that is, high level), a second level (that is, medium level), or a third level (that is, low level). When the level is the first level, the terminal performs event reporting only within the first area (that is, does not perform event reporting outside the first area). When the level is the second level, the terminal is needed to perform event reporting within the first area, and performs conditional event reporting when outside the first area and within the second area. When the level is the third level, the terminal is needed to perform event reporting within the first area, and performs conditional event reporting outside the first area.

For item A-3, as shown in FIG. 6, in forward usage, area A is an inside (inside) area, and area B is an outside (outside) area. While in reverse usage, area A is an outside area, and area B is an inside area. Therefore, forward usage of the first area means that an area inside the first area is the inside area, and an area outside the first area is the outside area. Reverse usage of the first area means that an area outside the first area is the inside area, and an area inside the first area is the outside area. Different values of the area usage indication may indicate forward usage or reverse usage of the first area, as shown in Table 1. The default is forward usage, that is, the area outside the first area used hereinafter can be understood as the outside area in forward usage.

**Table 1 Example of area usage indication**

| Area usage indication | A | B |
|---|---|---|
| 0 (forward usage) | inside | outside |
| 1 (reverse usage) | outside | inside |

Normally, the terminal often performs event reporting within a certain area. However, for users who are long-term active in a fixed area, to save power, there is no need for periodic event reporting. Event reporting is valuable only when out of a certain area. For example, elderly people in a nursing home are active in the nursing home year-round, and location reporting after they leave the nursing home to prevent getting lost (elderly phone). For kindergarten children that leaves the school range during class time, locations need to be reporting needs to be reported to their parents' phones to prevent getting lost (children's watch). Therefore, for some special terminals (such as elderly phones and children's watches), the network side may configure that they use the first area in reverse manner, thereby meeting location service requirements and power saving requirements in corresponding scenarios.

It should be noted that one implementation of the area usage indication is that the terminal does not provide this parameter, and the first network-side device determines it based on information such as a type of the fourth network-side device, a location service type, and location related subscription information of the terminal.

Optionally, step 401 "the terminal sends first information" includes:
sending, by the terminal, a target message, where the target message carries the first information; where
the target message includes at least one of the following items B-1 to B-3:
   item B-1: a registration request (registration request) message;
   item B-2: a location privacy setting request message; and
   item B-3: an uplink non-access stratum transport message.

The terminal may send the first information to a third network-side device, so that the third network-side device sends it to a second network-side device, the second network-side device provides the first information to the first network-side device, and the first network-side device acquires the event reporting configuration information matching the first information and sends it to the terminal. Herein, the first network-side device may be a GMLC, the second network-side device may be a UDM, and the third network-side device may be an AMF.

For item B-1, for example, the terminal may carry the first information in 5G mobility management (5G Mobility Management, 5GMM) capability information, and encapsulate the 5GMM capability information in a registration request message, thereby sending the registration request to the AMF. Alternatively, the terminal may encapsulate the first information as a new IE in a registration request message, thereby sending the registration request to the AMF.

The above item B-2 indicates that the terminal may send the first information to the AMF through a UE location privacy setting request (UE Location Privacy Setting Request) message.

The above item B-3 indicates that the terminal may send the first information to the AMF through an uplink non-access stratum transport (UL NAS TRANSPORT) message.

Step 402: The terminal receives the event reporting configuration information matching the first information.

The first information is used for indicating related information about the terminal performing event reporting outside a first area (that is, at least one of related parameter information, capability, or behavior of whether to report). Therefore, the event reporting configuration information matching the first information means that the event reporting configuration information matches at least one of the related parameter information about the terminal performing event reporting when outside the first area, capability, or behavior of whether to report.

Optionally, the event reporting configuration information includes at least one of the following items C-1 to C-2:
item C-1: target indication information, where the target indication information is used for indicating whether the terminal is needed or not to perform event reporting when outside the first area; and
item C-2: a reporting policy, where the reporting policy is used for indicating at least one constraint for the terminal to perform event reporting.

Item C-1 may be determined based on the reporting indication in the first information. If the reporting indication is understood based on "understanding one", that is, the reporting indication represents a capability, if the reporting indication indicates that the terminal supports performing event reporting when outside the first area, the target indication information indicates the terminal to perform event reporting when outside the first area. If the reporting indication indicates that the terminal does not support performing event reporting when outside the first area, the target indication information indicates that the terminal not to perform event reporting when outside the first area. If the reporting indication is based on "understanding two or three", it does not need to determine the target indication information based on the reporting indication. That is, in this case, the event reporting configuration information does not include the target indication information.

Item C-2 is used for indicating a constraint for the terminal to implement conditional event reporting. In a case that the reporting indication in the first information indicates that the terminal supports performing event reporting when outside the first area, or indicates the terminal to perform event reporting when outside the first area, or indicates the above second level or the above third level, it indicates that the terminal is required to perform conditional event reporting. Therefore, in this case, the event reporting configuration information needs to include the reporting policy to indicate to the terminal how to implement conditional event reporting.

Optionally, the first information further includes a policy set, where the policy set includes at least one candidate reporting policy, and the reporting policy included in the event reporting configuration information is determined based on one candidate reporting policy in the policy set.

Thus, the terminal may send the policy set to the first network-side device (for example, the terminal sends the policy set to a third network-side device, so that the third network-side device sends it to a second network-side device, and the second network-side device provides the policy set to the first network-side device). In this way, the first network-side device may select a candidate reporting policy from the policy set, thereby determining, based on the selected candidate reporting policy, the reporting policy to be sent to the terminal.

In addition, the first network-side may alternatively determine the reporting policy to be sent to the terminal based on at least one of the following information:
a type of a fourth network-side device (that is, a type of a device requesting a location service (for example, LCS client/AF));
a location service type (that is, a type of deferred 5GC-MT-LR (area or periodic or motion));
location related subscription information of the terminal;
the first area;
a second area;
the reporting indication; and
the area usage indication.

Alternatively, a fourth network-side device (that is, a device requesting a location service) may carry the reporting policy in a location service request sent to the first network-side device, thereby enabling the first network-side device to determine, based on the reporting policy carried in the location service request, the reporting policy to be sent to the terminal.

Step 403: The terminal performs event reporting based on the event reporting configuration information.

The event reporting includes location information of the terminal. Therefore, the terminal performing event reporting may report the location information of the terminal to the network side.

From the above steps 401 to 403, it can be learned that in the embodiments of the present application, the terminal can send the first information to the first network-side device, enabling the first network-side device to acquire the event reporting configuration information matching the first information and send the event reporting configuration information to the terminal. In this way, the terminal can perform event reporting based on the event reporting configuration information. The first information is used for indicating the related information about the terminal performing event reporting outside the first area, the first area (that is, event report allowed area) being an area in which the terminal is allowed to perform event reporting. Thus, it can be learned that in the embodiment of the present application, the terminal can report to the first network-side device information related to performing event reporting outside the event report allowed area (that is, the first information). This enables the first network-side device to configure appropriate event reporting configuration information for the terminal based on the related information, thereby allowing the terminal to perform more suitable event reporting outside the event report allowed area. Therefore, the embodiments of the present application provide a terminal with a method of performing event reporting outside an event report allowed area.

In addition, in related technologies, the terminal supports performing event reporting only when within the event report allowed area, but when the terminal is outside the event report allowed area, whether the terminal is allowed to perform event reporting, and if allowed, how the terminal should perform event reporting, are not provided with specific solutions in related technologies.

Moreover, for not performing event reporting outside the event report allowed area, the problem is that when the terminal does not perform event reporting for a long time, an LCS client/AF may consider that the terminal has disconnected a location service session (LCS session), thereby leading to cancellation of a location service procedure.

The following further describes the consequences of not performing event reporting for different types of event reporting:
(1) Area-based event reporting: In this type, the LCS client/AF provides a target area (target area). If the target area is larger than the event report allowed area, no location information is collected outside the event report allowed area and within the target area, reducing the number of collected positioning data and the experience of the LCS client/AF.
(2) Periodic-based event reporting: Outside the event report allowed area, the terminal does not report a location at all. As a result, the LCS client/AF considers that the terminal is unavailable and thus disconnect the connection, affecting the location provision of some commercial services.
(3) Motion-based event reporting: Assuming that the event report allowed area is small, a preset straight-line movement distance may make the terminal leave the event report allowed area, and reporting will not be triggered, leading to reduced reporting information.

However, if conditional event reporting can be performed outside the event report allowed area, this allows the LCS client/AF to know the location situation of the terminal outside the event report allowed area to a certain extent, and still maintains the LCS session (during the location service). In addition, it also takes into account power saving. For example, occasional reporting can be performed based on the power saving situation of the UE terminal itself, or the reporting frequency can be reduced, allowing the network side to know that the event reporting of the terminal is still active.

The following further describes the benefits of performing conditional event reporting outside the event report allowed area for different types of event reporting:
(1) Area-based event reporting: In this type, the terminal is allowed to report location within the target area and outside the event report allowed area, which meets the demand of the LCS client/AF for collecting location information and also considers the actual power of the terminal.
(2) Periodic-based event reporting: Outside the area, the terminal performs conditional reporting considering its own power, which can still maintain connections for some commercial services.
(3) Motion-based event reporting: Assuming that the event report allowed area is small, a preset straight-line movement distance may make the terminal leave the area, in which case event reporting will still be maintained.

It can be learned that performing conditional event reporting outside the event report allowed area can balance the demand for location services and the power saving demand of the terminal.

Optionally, step 403 "the terminal performs event reporting based on the event reporting configuration information" includes at least one of the following items E-1 to E-10:

Item E-1: In a case that the event reporting configuration information includes the target indication information, and the target indication information indicates that the terminal is not needed to perform event reporting when outside the first area, the terminal does not perform event reporting when outside the first area. That is, when the reporting indication is understood based on "understanding one", if the target indication information received by the terminal indicates that event reporting is not needed outside the first area, the terminal does not perform event reporting when outside the first area.

Item E-2: In a case that the event reporting configuration information includes the target indication information and the reporting policy, and the target indication information indicates that the terminal is needed to perform event reporting when outside the first area, the terminal performs event reporting based on the reporting policy when outside the first area. That is, when the reporting indication is understood based on "understanding one", if the terminal receives the target indication information and the reporting policy, and the target indication information indicates that event reporting is required outside the first area, the terminal performs conditional event reporting based on the reporting policy when outside the first area.

Item E-3: In a case that the event reporting configuration information includes the target indication information, the reporting configuration information does not include the reporting policy, and the target indication information indicates that the terminal is needed to perform event reporting when outside the first area, the terminal does not perform event reporting when outside the first area, or the terminal performs event reporting based on implementation when outside the first area. That is, when the reporting indication is understood based on "understanding one", if the terminal receives the target indication information but does not receive the reporting policy, and the target indication information indicates that event reporting is required outside the first area, the terminal may not perform event reporting when outside the first area, or may perform event reporting based on the actual situation of the terminal.

Item E-4: In a case that the first information includes the reporting indication, and the reporting indication indicates that event reporting is not to be performed when outside the first area, the terminal does not perform event reporting when outside the first area. That is, when the reporting indication is understood based on "understanding two", if the reporting indication indicates that event reporting is not to be performed when outside the first area, the network side may not send the reporting policy to the terminal. In this way, the terminal does not perform event reporting when outside the first area.

Item E-5: In a case that the first information includes the reporting indication, the reporting indication indicates that event reporting is to be performed when outside the first area, and the event reporting configuration information includes the reporting policy, the terminal performs event reporting based on the reporting policy when outside the first area. That is, when the reporting indication is understood based on "understanding two", if the reporting indication indicates that event reporting is to be performed when outside the first area, the network side may send the reporting policy to the terminal. In this way, the terminal may perform conditional event reporting based on the reporting policy when outside the first area.

Item E-6: In a case that the first information includes the reporting indication, the reporting indication indicates that event reporting is to be performed when outside the first area, and the event reporting configuration information does not include the reporting policy, the terminal does not perform event reporting when outside the first area, or the terminal performs event reporting based on implementation when outside the first area. That is, when the reporting indication is understood based on "understanding two", if the reporting indication indicates that event reporting is to be performed when outside the first area, the network side may alternatively not send the reporting policy to the terminal. In this way, the terminal may not perform event reporting when outside the first area, or may perform event reporting based on the actual situation of the terminal.

Item E-7: In a case that the first information includes the reporting indication, the reporting indication indicates a first level, and the event reporting configuration information does not include the reporting policy, the terminal does not perform event reporting when outside the first area. That is, when the reporting indication is understood based on "understanding three", the first level represents that the terminal does not perform event reporting when outside the first area (that is, the first level is an implicit indication of "the terminal does not perform event reporting when outside the first area"). When the reporting indication indicates the first level, the network side may not send the reporting policy to the terminal. In this way, the terminal may not perform event reporting when outside the first area.

Item E-8: In a case that the first information includes the reporting indication, the reporting indication indicates a second level, and the event reporting configuration information includes the reporting policy, the terminal performs event reporting based on the reporting policy when outside the first area and within a second area. That is, when the reporting indication is understood based on "understanding three", the second level represents that the terminal performs conditional event reporting when outside the first area and within the second area (that is, the second level is an implicit indication of "the terminal performs conditional event reporting when outside the first area and within the second area"). When the reporting indication indicates the second level, the network side may send the reporting policy to the terminal. In this way, the terminal may perform conditional event reporting based on the reporting policy when outside the first area and within a second area.

Item E-9: In a case that the first information includes the reporting indication, the reporting indication indicates a third level, and the event reporting configuration information includes the reporting policy, the terminal performs event reporting based on the reporting policy when outside the first area. That is, when the reporting indication is understood based on "understanding three", the third level represents that the terminal performs conditional event reporting when outside the first area (that is, the third level is an implicit indication of "the terminal performs conditional event reporting when outside the first area"). When the reporting indication indicates the third level, the network side may send the reporting policy to the terminal. In this way, the terminal may perform conditional event reporting based on the reporting policy when outside the first area.

Item E-10: In a case that the first information includes the reporting indication, the reporting indication indicates the second level or the third level, and the event reporting configuration information does not include the reporting policy, the terminal does not perform event reporting when outside the first area, or the terminal performs event reporting based on implementation when outside the first area. That is, when the reporting indication is understood based on "understanding three", if the reporting indication indicates the second level or the third level, the network side may alternatively not send the reporting policy to the terminal. In this way, the terminal may not perform event reporting when outside the first area, or may perform event reporting based on the actual situation of the terminal.

Optionally, the reporting policy includes at least one of the following items D-1 to D-3:
item D-1: a maximum reporting count of event reportings;
item D-2: a minimum time interval between two consecutive event reportings; and
item D-3: a trigger condition for event reporting, where the trigger condition is used for indicating threshold information other than the minimum time interval and the maximum reporting count.

The item D-1 is used for indicating that when the terminal performs conditional event reporting, the reporting count cannot exceed the maximum reporting count. For example, in performing conditional event reporting outside the first area, after the outside-the-first-area event reporting count reaches the maximum reporting count, the terminal no longer continues to perform event reporting outside the first area.

The item D-2 is used for indicating that when the terminal performs conditional event reporting, the time interval between two consecutive event reportings cannot exceed the minimum time interval.

The item D-3 indicates other constraints for implementing conditional event reporting, for example, performing event reporting only when the straight-line movement distance reaches 100 meters.

Optionally, the terminal performing event reporting based on the reporting policy includes:
performing, by the terminal, conditional event reporting based on at least one of the maximum reporting count, the minimum time interval, and the trigger condition.

For example, if the reporting policy includes the maximum reporting count (x), the minimum time interval (t), and the trigger condition (condition F), the terminal performing conditional event reporting based on the reporting policy when outside the first area means: the terminal, when outside the first area, performs event reporting according to t in a case that the condition F is detected, and stops reporting when the reporting count reaches x. As compared with a within-the-first-area reporting parameter, a constraint for reporting outside the first area is stricter, for example, a smaller maximum reporting count, a longer minimum reporting interval, or a longer straight-line movement distance.

Optionally, the method further includes:
in a case that at least one piece of information included in the first information changes, sending, by the terminal, third information, where the third information includes the information that has changed in the first information.

Thus, it can be learned that in a case that at least one of "the second area, the reporting indication, the area usage indication, and the policy set" changes, the terminal may send the changed information to the first network-side device.

The manner in which the terminal sends the third information is the same as the manner in which the terminal sends the first information as described above. That is, the terminal sends the third information to the third network-side device, the third network-side device sends it to the second network-side device, and the second network-side device provides the third information to the first network-side device.

Optionally, the method further includes:
receiving, by the terminal, fourth information, where the fourth information includes at least one of the first area and the event reporting configuration information, the fourth information being determined based on the third information; and
performing, by the terminal, event reporting based on the fourth information.

Thus, in a case that at least one of "the second area, the reporting indication, the area usage indication, or the policy set" of the terminal changes, the first network-side device may further update the first area and the event reporting configuration information (including at least one of target indication information or the reporting policy) based on the changed information, and send the updated information (that is, the fourth information) to the terminal, so that the terminal may perform event reporting based on the fourth information, thus making the event reporting situation conform to the actual situation of the terminal.

The first network-side device may send the fourth information to the third network-side device, the third network-side device sends it to a fifth network-side device (for example, LMF), and the fifth network-side device sends it to the terminal.

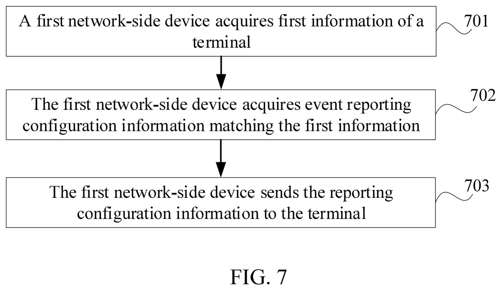

According to a second aspect, as shown in FIG. 7, an embodiment of the present application further provides an event reporting method, which may include the following steps 701 to 703:
Step 701: A first network-side device acquires first information of a terminal.

The first information is used for indicating related information about the terminal performing event reporting outside a first area, the first area being an area in which the terminal is allowed to perform event reporting, that is, the first area being the event report allowed area as described above. Optionally, the terminal performing event reporting when outside the first area may specifically be: the terminal performing conditional event reporting when outside the first area. Here, a constraint for implementing the conditional event reporting may be a constraint indicated by a reporting policy configured on a network side.

In addition, in the embodiments of the present application, the terminal may report a power saving area (used for indicating that the terminal is to perform event reporting in the area) to the network side, and the network side may determine an event report allowed area based on the power saving area, which is generally converting a fine-grained area into a coarse-grained one, for example, converting a rectangular area into a TA list or a cell list, as shown in FIG. 5.

In addition, the first information is used for indicating the related information about the terminal performing event reporting when outside the first area, that is, the first information is used for indicating at least one of related parameter information, capability, or whether to report for the terminal to perform event reporting when outside the first area.

Optionally, the first information includes at least one of the following items A-1 to A-3:
item A-1: a second area, where the second area is used for indicating an area in which event reporting is expected to perform by the terminal;
item A-2: a reporting indication (that is, Power saving class), where the reporting indication is used for indicating whether the terminal supports performing event reporting when outside the first area, or indicating whether the terminal performs event reporting when outside the first area, or indicating at least one level related to the terminal performing event reporting when outside the first area; and
item A-3: an area usage indication (area usage indication), where the area usage indication is used for indicating forward usage of the first area or reverse usage of the first area.

For specific explanations of the above items A-1 to A-3, reference can be made to the foregoing description and details are not repeated here.

Optionally, step 701 "the first network-side device acquires first information of a terminal" includes:
acquiring, by the first network-side device, the first information from a second network-side device, where the first information stored in the second network-side device is sent by the terminal to the second network-side device through a third network-side device.

Thus, it can be learned that the terminal may send the first information to the third network-side device, the third network-side device sends it to the second network-side device, and the second network-side device provides the first information to the first network-side device. Herein, the first network-side device may be a GMLC, the second network-side device may be a UDM, and the third network-side device may be an AMF.

Step 702: The first network-side device acquires event reporting configuration information matching the first information.

The first information is used for indicating related information about the terminal performing event reporting outside a first area (that is, at least one of related parameter information, capability, or behavior of whether to report). Therefore, the event reporting configuration information matching the first information means that the event reporting configuration information matches at least one of the related parameter information about the terminal performing event reporting when outside the first area, capability, or behavior of whether to report.

Optionally, the event reporting configuration information includes at least one of the following items C-1 to C-2:
item C-1: target indication information, where the target indication information is used for indicating whether the terminal is needed or not to perform event reporting when outside the first area; and
item C-2: a reporting policy, where the reporting policy is used for indicating at least one constraint for the terminal to perform event reporting.

For specific explanations of the above items C-1 to C-2, reference can be made to the foregoing description and details are not repeated here.

Step 703: The first network-side device sends the reporting configuration information to the terminal.

Optionally, step 703 "the first network-side device sends the event reporting configuration information to the terminal" includes:
sending, by the first network-side device, the event reporting configuration information to the terminal through a third network-side device and a fifth network-side device.

The third network-side device may be an AMF, and the fifth network-side device may be an LMF.

Thus, it can be learned that the first network-side device may send the reporting configuration information to the third network-side device, the third network-side device sends the reporting configuration information to the fifth network-side device, and the LMF fifth network-side device sends the reporting configuration information to the terminal.

From the above steps 701 to 703, it can be learned that in the embodiments of the present application, the terminal can send the first information to the first network-side device, enabling the first network-side device to acquire the event reporting configuration information matching the first information and send the event reporting configuration information to the terminal. In this way, the terminal can perform event reporting based on the event reporting configuration information. The first information is used for indicating the related information about the terminal performing event reporting outside the first area, the first area (that is, event report allowed area) being an area in which the terminal is allowed to perform event reporting. Thus, it can be learned that in the embodiment of the present application, the terminal can report to the first network-side device information related to performing event reporting outside the event report allowed area (that is, the first information). This enables the first network-side device to configure appropriate event reporting configuration information for the terminal based on the related information, thereby allowing the terminal to perform more suitable event reporting outside the event report allowed area. Therefore, the embodiments of the present application provide a terminal with a method of performing event reporting outside an event report allowed area.

Optionally, the reporting policy includes at least one of the following items D-1 to D-3:
item D-1: a maximum reporting count of event reportings;
item D-2: a minimum time interval between two consecutive event reportings; and
item D-3: a trigger condition for event reporting, where the trigger condition is used for indicating threshold information other than the minimum time interval and the maximum reporting count.

For the specific explanations of the above items D-1 to D-2, reference can be made to the foregoing description, and details are not repeated here.

Optionally, in a case that the event reporting configuration information includes the reporting policy, the acquiring, by the first network-side device, event reporting configuration information matching the first information includes one of the following items F-1 to F-2:
item F-1: in a case that the reporting indication indicates that the terminal supports performing event reporting when outside the first area, or indicates the terminal to perform event reporting when outside the first area, or indicates a second level or a third level, determining, by the first network-side device, the event reporting configuration information based on a location service type and location related subscription information of the terminal (that is, determining the reporting policy included in the event reporting configuration information).

In item F-1, further, the first network-side device may determine the reporting policy to be sent to the terminal, in combination with the first area, the second area, the reporting indication, the area usage indication, the location service type, and location related subscription information of the terminal.

That is, in one implementation, the first network-side may determine the reporting policy required to be sent to the terminal based on at least one of the following information:
a type of a fourth network-side device (that is, a type of a device requesting a location service (for example, LCS client/AF));
a location service type (that is, a type of deferred 5GC-MT-LR (area or periodic or motion));
location related subscription information of the terminal;
the first area;
a second area;
the reporting indication; and
the area usage indication.

Item F-2: In a case that the reporting indication indicates that the terminal supports performing event reporting when outside the first area, or indicates the terminal to perform event reporting when outside the first area, or indicates the second level or the third level, determining, by the first network-side device, the event reporting configuration information based on a reporting policy received from a fourth network-side device (that is, determining the reporting policy included in the event reporting configuration information).

Thus, it can be learned that the fourth network-side device (that is, a device requesting the location service) may also send the reporting policy to the first network-side device, enabling the first network-side device to determine the reporting policy to be sent to the terminal based on the reporting policy sent by the fourth network-side device.

Here, optionally, the process of the first network-side device receiving the reporting policy sent by the fourth network-side device includes: receiving, by the first network-side device, a location service request sent by the fourth network-side device, where the location service request carries the reporting policy.

That is, the fourth network-side device may carry the reporting policy to be sent to the first network-side device in the location service request.

Item F-3: In a case that the first information further includes a policy set, and the reporting indication indicates that the terminal supports performing event reporting when outside the first area, or indicates the terminal to perform event reporting when outside the first area, or indicates the second level or the third level, selecting, by the first network-side device, a candidate reporting policy from the policy set based on a location service type, and determining the event reporting configuration information based on the selected candidate reporting policy (that is, determining the reporting policy included in the event reporting configuration information), where the policy set includes at least one candidate reporting policy.

From item F-3, it can be learned that the terminal may send the policy set to the first network-side device (for example, the terminal sends the policy set to the third network-side device, the third network-side device sends it to the second network-side device, and the second network-side device provides the policy set to the first network-side device), so that the first network-side device may select a candidate reporting policy from the policy set, and determine a reporting policy to be sent to the terminal based on the selected candidate reporting policy.

Here, when the first network-side device selects a candidate reporting policy from the policy set, in addition to considering the location service type, it may further combine the terminal's location related subscription information.

The first network-side device may use the candidate reporting policy selected from the policy set as the reporting policy to be sent to the terminal, or may select some constraints from the candidate reporting policy as constraints of the reporting policy to be sent to the terminal.

In addition, when the reporting configuration information includes target indication information, the first network-side device determines the target indication information based on the reporting indication, that is, if the reporting indication is understood based on the above "understanding one", that is, the reporting indication represents a capability of the terminal, then if the reporting indication indicates that the terminal supports performing event reporting when outside the first area, the target indication information indicates the terminal to perform event reporting when outside the first area; if the reporting indication indicates that the terminal does not support performing event reporting when outside the first area, the target indication information indicates that the terminal does not perform event reporting when outside the first area. If the reporting indication is based on the above "understanding two or three", then it is not necessary to determine the target indication information based on the reporting indication, that is, in this case, the event reporting configuration information does not include the target indication information.

Optionally, the method further includes:
sending, by the first network-side device, second information to a fourth network-side device, where the second information includes at least one of the following items G-1 to G-5:
item G-1: the first area;
item G-2: a reporting indication, where the reporting indication is used for indicating whether the terminal supports performing event reporting when outside the first area, or indicating whether the terminal performs event reporting when outside the first area;
item G-3: the event reporting configuration information (which may include at least one of the above target indication information or reporting policy);
item G-4: an area usage indication, where the area usage indication is used for indicating forward usage of the first area or reverse usage of the first area; and
item G-5: a target area error cause (Target area error indication), where the target area error cause is used for indicating that there is no overlapping area between a target area (target area) and a second area (Power saving area) or that the target area has a logical error, the target area being an area in which the terminal is expected to perform event reporting (that is, the area in which the network side expects the terminal to perform event reporting, for example, a location service request may include an area in which it is desired to obtain the terminal's location information in that area, and that area is the target area), and the second area being used for indicating an area in which event reporting is expected to perform by the terminal.

For relevant explanations of items G-1 to G-4, reference can be made to the foregoing description and details are not repeated here.

In addition, item G-5 is only applicable to the type of location service request being area-based event reporting. The target area error cause can be understood as a reason in a rejection message rejecting the location service request message, indicating that the target area requested in the LCS location server request message is incorrect. For example, there is no overlapping area between the target area and the power saving area or there is a logical error, and the target area needs to be corrected. For example, the power saving area is area A, but the target area is a country to which area A belongs. In this case, in area-based event reporting, if a user has never left the country, the leaving (leaving) or entering (entering) type reporting will never be triggered, and the user needs to report the location throughout the country, the target area is considered too large and has a logical error.

It can be understood that the target area error cause may alternatively be used for indicating that there is no overlapping area between the target area and the first area (that is, event report allowed area).

In addition, if the fourth network-side device receives the target area error cause, indicating that the target area is incorrect, the fourth network-side device may re-initiate a location service request, where the request carries a re-determined target area.

Optionally, the method further includes:
in a case that the first network-side device has subscribed to information of the terminal, acquiring, by the first network-side device, third information provided by the second network-side device, where the third information includes information that has changed in the first information, and the third information stored in the second network-side device is sent by the terminal to the second network-side device through a third network-side device.

Thus, it can be learned that in a case that at least one of "the second area, the reporting indication, the area usage indication, or the policy set" changes, the terminal may send the changed information (that is, the third information) to the second network-side device, where if the first network-side device has subscribed to the information of the terminal in the second network-side device, the second network-side device may provide it to the first network-side device after receiving the third information.

Optionally, the method further includes:
updating, by the first network-side device, fourth information based on the third information, where the fourth information includes at least one of the first area and the event reporting configuration information; and
sending, by the first network-side device, the updated fourth information to the terminal.

Thus, in a case that at least one of "the second area, the reporting indication, the area usage indication, or the policy set" of the terminal changes, the first network-side device may further update the first area and the event reporting configuration information (including at least one of the target indication information or the reporting policy) based on the changed information, and send the updated information (that is, the fourth information) to the terminal, so that the terminal may perform event reporting based on the fourth information, thus making the event reporting situation conform to the actual situation of the terminal.

The first network-side device may send the fourth information to the third network-side device, the third network-side device sends it to a fifth network-side device (for example, LMF), and the fifth network-side device sends it to the terminal.

In addition, further, the first network-side device may further determine the fourth information based on the third information, and further in combination with the target area, the currently used first area, the currently used reporting policy, and the current report status (that is, report status, such as the reporting count so far, or the reporting duration).

According to a third aspect, an embodiment of the present application further provides an event reporting method, including the following step H-1:

Step H-1: A fourth network-side device sends a reporting policy to a first network-side device, where the reporting policy is used for indicating at least one constraint for a terminal to perform event reporting.

Here, the fourth network-side device may be an LCS client/AF.

The first network-side device may determine a reporting policy to be sent to the terminal based on the reporting policy sent by the fourth network-side device.

Optionally, step H-1 "the fourth network-side device sends a reporting policy to the first network-side device" includes:
sending, by the fourth network-side device, a location service request to the first network-side device, where the location service request carries the reporting policy.

Thus, it can be learned that the fourth network-side device (that is, a device requesting a location service) may carry the reporting policy in the location service request sent to the first network-side device, thereby enabling the first network-side device to determine, based on the reporting policy carried in the location service request, the reporting policy to be sent to the terminal.

Optionally, the method further includes:
receiving, by the fourth network-side device, second information sent by the first network-side device, where the second information includes at least one of the following items G-1 to G-5:
item G-1: the first area;
item G-2: a reporting indication, where the reporting indication is used for indicating whether the terminal supports performing event reporting when outside the first area, or indicating whether the terminal performs event reporting when outside the first area;
item G-3: the event reporting configuration information (which may include at least one of the above target indication information or reporting policy);
item G-4: an area usage indication, where the area usage indication is used for indicating forward usage of the first area or reverse usage of the first area; and
item G-5: a target area error cause (Target area error indication), where the target area error cause is used for indicating that there is no overlapping area between a target area (target area) and a second area (Power saving area) or that the target area has a logical error, the target area being an area in which the terminal is expected to perform event reporting (that is, the area in which the network side expects the terminal to perform event reporting, for example, a location service request may include an area in which it is desired to obtain the terminal's location information in that area, and that area is the target area), and the second area being used for indicating an area in which event reporting is expected to perform by the terminal.

For relevant explanations for items G-1 to G-5, reference can be made to the foregoing description and details are not repeated here.

In addition, if the fourth network-side device receives the target area error cause, the fourth network-side device may re-initiate a location service request carrying a re-determined target area.

According to a fourth aspect, an embodiment of the present application further provides an event reporting method, including the following steps K-1 to K-2:

Step K-1: A second network-side device acquires first information of a terminal and stores the first information.

The first information is used for indicating related information about the terminal performing event reporting outside a first area, the first area being an area in which the terminal is allowed to perform event reporting.

In addition, the second network-side device may receive the first information from the terminal through a third network-side device.

Step K-2: The second network-side device provides the first information to a first network-side device.

Optionally, the second network-side device acquiring the first information of the terminal includes:
receiving, by the second network-side device, the first information from the terminal through the third network-side device.

Here, the second network-side device may be a UDM, the third network-side device may be an AMF, and the first network-side device may be a GMLC.

After acquiring the first information, the first network-side device may acquire event reporting configuration information matching the first information, and send the event reporting configuration information to the terminal, so that the terminal performs event reporting based on the event reporting configuration information.

Optionally, the first information includes at least one of the following items A-1 to A-3:
item A-1: a second area, where the second area is used for indicating an area in which event reporting is expected to perform by the terminal;
item A-2: a reporting indication (that is, Power saving class), where the reporting indication is used for indicating whether the terminal supports performing event reporting when outside the first area, or indicating whether the terminal performs event reporting when outside the first area, or indicating at least one level related to the terminal performing event reporting when outside the first area; and item A-3: an area usage indication (area usage indication), where the area usage indication is used for indicating forward usage of the first area or reverse usage of the first area.

For specific explanations for the above items A-1 to A-3, reference can be made to the foregoing description and details are not repeated here.

Optionally, the first information further includes a policy set, where the policy set includes at least one candidate reporting policy.

Optionally, the method further includes:
receiving, by the second network-side device, third information sent by the first terminal, and storing the third information, where the third information includes information that has changed in the first information; and
providing, by the second network-side device, the third information to the first network-side device.

Thus, it can be learned that in a case that at least one of "the second area, the reporting indication, the area usage indication, or the policy set" changes, the terminal may send the changed information (that is, the third information) to the second network-side device, where if the first network-side device has subscribed to the information of the terminal in the second network-side device, the second network-side device may provide it to the first network-side device after receiving the third information.

In short, the specific implementations of the event reporting method in the embodiments of the present application may be as described in the following implementations one to four:

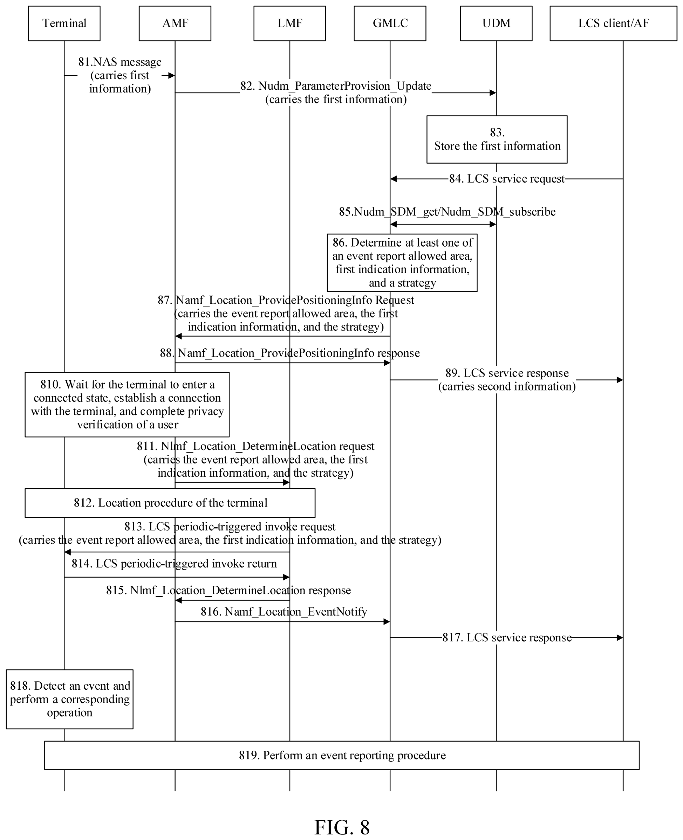

Implementation one: As shown in FIG. 8, it includes the following steps 81 to 819:

Step 81: A terminal sends NAS signaling to an AMF, where the NAS signaling carries first information, and the first information includes at least one of the following items (1) to (5):
(1) a UE ID (that is, terminal identifier);
(2) a message type;
(3) a power saving area (that is, a second area, that is, an area represented by coordinates or TA/cell, used to describe that the terminal is to perform event reporting in the area when in a power saving state); and
(4) a power saving class (that is, reporting indication). Here, the power saving class may have the following three understandings:

Understanding one: represents a capability of the terminal, indicating whether the terminal supports performing event reporting when outside an event report allowed area (that is, first area). In one implementation, the reporting indication includes the following two global mutually exclusive settings: one is that the terminal supports performing event reporting outside the event report allowed area, and the other is that the terminal does not support performing event reporting outside the event report allowed area, the latter being the default setting.

Understanding two: indicates that indicating whether the terminal performs event reporting when outside the event report allowed area means the terminal performing event reporting when outside the event report allowed area.

Understanding three: indicates that indicating the level at which the terminal performs event reporting when outside the event report allowed area means indicating a power saving level of the terminal.

For understanding two, the specific implementation may be as follows:

In one implementation, the power saving class has two values: 0 indicates not performing, and 1 indicates performing conditionally.

For understanding three, the specific implementation may be as follows:

In one implementation, the power saving class includes high and low levels to indicate whether the terminal performs event reporting when outside the event report allowed area. High indicates not performing, and low indicates performing conditionally.

Another implementation may be applicable to the type requested by the LCS client/AF being area-based event reporting, that is: the power saving class includes different levels of high, medium, and low. When the level is high, the policy is: the terminal performs event reporting only within the event report allowed area. When the level is medium, the policy is that the terminal is needed to perform event reporting within the event report allowed area, and perform conditional reporting when outside the event report allowed area and within the power saving area. When the level is low, the policy is: the terminal is needed to perform event reporting within the event report allowed area, and perform conditional reporting when outside the event report allowed area.

(5) An area usage indication (that is, area usage indication), indicating forward usage or reverse usage of the event report allowed area. In one implementation, the reporting indication includes the following two global mutually exclusive settings for the event report allowed area: one is reverse usage, and the other is forward usage, the latter being the default setting.

The terminal may carry the first information in 5GMM capability information, and encapsulate the 5GMM capability information in a registration request (registration request) message, thereby sending the registration request to the AMF.

Alternatively, the terminal may encapsulate the first information as a new IE in the registration request message, thereby sending the registration request to the AMF.

Alternatively, the terminal may send the first information to the AMF through a terminal location privacy setting request (UE Location Privacy Setting Request) message.

Alternatively, the terminal may send the first information to the AMF through an uplink non-access stratum transport (UL NAS TRANSPORT) message.

Step 82: The AMF sends an UDM network element update data provision message (Nudm_ParameterProvision_Update) to a UDM, where the Nudm_ParameterProvision_Update carries the first information (that is, information such as the UE ID, the power saving area, the power saving class, and the area usage indication).

Step 83: The UDM stores the received first information (that is, stores the power saving area, the power saving class, and the area usage indication of the UE ID).

Step 84: An LCS client/AF sends a location service request (LCS service request) to a GMLC, that is, requests the terminal to perform deferred reporting.

Here, it should be noted that an untrusted AF needs to perform service authentication through an NEF as an intermediate network element; the AF initiates a subscription to the NEF; and the NEF initiates a location service request to the GMLC.

Step 85: The GMLC sends Nudm_SDM_get or a UDM network element subscription data subscribe request (Nudm_SDM_subscribe) message to the UDM to query location-related subscription information of the UE ID, acquire the first information (that is, information such as the power saving area, the power saving class, and the area usage indication), and save it.

This step may be a one-time query or a subscription. If it is a subscription here, step 115 in the subsequent embodiment four will occur.

Step 86: The GMLC performs at least one of the following (1) to (3):
(1) determining an event report allowed area (that is, a first area), for example, based on the power saving area;
(2) determining target indication information, where the target indication information is used for indicating whether the terminal is needed or not to perform event reporting when outside the event report allowed area. In other words, if based on "understanding one", that is, the power saving class in step 81 is a capability, the GMLC determines here whether the terminal is required to report outside the area. If based on "understanding two" or "understanding three", that is, the power saving class in step 81 indicates a power saving level of the terminal, the GMLC does not need to determine the target indication information; and
(3) determining a strategy (that is, a reporting policy), used for indicating a constraint for the terminal to perform event reporting when outside the event report allowed area, including at least one of the following parameters (a) to (c):
   (a) a maximum count of reportings (that is, a maximum reporting count of event reportings);
   (b) a minimum reporting time interval (that is, a minimum time interval between two consecutive event reportings); and
   (c) a trigger condition for event reporting, where the trigger condition is used for indicating threshold information other than the minimum time interval and the maximum reporting count; and one implementation method may be: performing event reporting only when a straight-line movement distance reaches a certain threshold (for example, 100 meters).

The GMLC may determine the value of one or more parameters among the (a) to (c) based on the service type of the location service request in step 84 (that is, the type of deferred 5GC-MT-LR (area, periodic or motion), and the location-related subscription information acquired in step 85.

In addition, one implementation for the GMLC to determine the strategy may be: for example, the terminal is needed to perform periodic reporting in the event report allowed area, but outside the event report allowed area, the periodicity will be reduced, that is, the reporting time interval becomes twice the original. The reporting count has an upper limit, and after reaching the upper limit, no reporting will be performed outside the event report allowed area.

In addition, for example, if power saving class means "understanding one", the GMLC may determine the target indication information based on the specific content indicated by the power saving class. That is, if the power saving class indicates that the terminal supports performing event reporting when outside the event report allowed area, the target indication information indicates that the terminal is needed to perform event reporting when outside the event report allowed area. If the power saving class indicates that the terminal does not support performing event reporting when outside the event report allowed area, the target indication information indicates that the terminal is not needed to perform event reporting when outside the event report allowed area. One implicit implementation of the target indication information is that if the GMLC sends the target indication information to the terminal, it means that the terminal is needed to perform event reporting when outside the event report allowed area. If the GMLC does not send the target indication information to the terminal, it means that the terminal is not needed to perform event reporting when outside the event report allowed area.

If the power saving class indicates that the terminal supports performing event reporting when outside the event report allowed area (or the target indication information indicates the terminal to perform event reporting when outside the event report allowed area), the GMLC may further determine at least one constraint in the strategy based on the location service type and location related subscription information of the terminal. If the power saving class indicates that the terminal does not support performing event reporting when outside the event report allowed area, the GMLC does not need to determine the strategy.

For example, if the power saving class means "understanding two", for area-based or motion-based event reporting, in a case that the power saving class indicates the terminal to perform event reporting when outside the event report allowed area, the GMLC may further use the location related subscription information to determine at least one constraint in the strategy. In a case that the power saving class indicates the terminal not to perform event reporting when outside the event report allowed area, the GMLC does not need to determine the strategy.

For example, if the power saving class means "understanding three", for area-based event reporting, in a case that the power saving class indicates "medium level", the GMLC may further determine at least one constraint in the strategy, so that the terminal performs conditional reporting based on the strategy outside the event report allowed area and within the power saving area. In a case that the power saving class indicates "low level", the GMLC may further determine at least one constraint in the strategy, so that the terminal performs conditional reporting based on the strategy outside the event report allowed area. In a case that the power saving class indicates "high level", the GMLC does not need to determine the strategy.

Step 87: The GMLC sends a Namf_Location_ProvidePositioningInfo request to the AMF, where the message carries the event report allowed area and the above target indication information. Further, if the GMLC has determined the strategy in step 86, the message may also carry the strategy determined by the GMLC.

Step 88: The AMF replies a Namf_Location_ProvidePositioningInfo response to the GMLC, acknowledging receipt of the message in step 87.

Step 89: The GMLC sends second information to the LCS client/AF, where the second information includes at least one of the following (1) to (5):
(1) the event report allowed area (that is, determined by the GMLC in step 86);
(2) the power saving class;
(3) the strategy (that is, determined by the GMLC in step 86);
(4) the area usage indication; and
(5) a target area error indication, (only applicable to the type requested by the LCS client/AF being area-based event reporting), where the target area error indication can be understood as a cause (cause) in a rejection message rejecting the request message in step 84, indicating that the target area requested by the LCS client/AF is incorrect, such as no overlapping area between the target area and the power saving area or a logical error, and the target area needs to be corrected.

Step 810: The AMF, RAN, and UE perform steps 39 to 313 as described above, waiting for the terminal to enter a connected state, establish a connection with the terminal, and complete privacy verification of a user.

Step 811: The AMF sends an Nlmf Location DetermineLocation request to an LMF, where the message carries the event report allowed area and the target indication information. Further, if the AMF has received the strategy in step 87, the message may also carry the strategy received by the AMF.

Step 812: A terminal location procedure, that is, the LMF performs one or more location procedures to request and obtain the location of the terminal.

Step 813: The LMF sends an LCS periodic-triggered invoke request message to the UE, where the message carries the event report allowed area and the target indication information. Further, if the LMF has received the strategy in step 811, the message may also carry the strategy received by the LMF.

Step 814: The UE sends an LCS periodic-triggered invoke return to the LMF.

Step 815: The LMF sends an Nlmf_Location_DetermineLocation response to the AMF.

Step 816: The AMF sends Namf_Location_EventNotify to the GMLC.

Step 817: The GMLC sends an LCS service response to the LCS client/AF.

Step 818: The terminal detects an event and performs a corresponding operation.

That is, if the UE is outside the event report allowed area when detecting that an event has been triggered, at least one of the following actions (1) to (10) is performed:
(1) if the power saving class indicates the UE not to perform reporting when outside the event report allowed area, the UE does not perform reporting (that is, step 819 is absent);
(2) if the power saving class indicates the UE to perform event reporting when outside the event report allowed area, and the strategy is received in step 813, the UE performs conditional event reporting based on the strategy when outside the event report allowed area;
(3) if the power saving class indicates the UE to perform event reporting when outside the event report allowed area, and no strategy is received in step 813, the UE does not perform event reporting outside the event report allowed area, or the UE performs event reporting based on implementation;
(4) if the target indication information received in step 813 indicates the UE not to perform event reporting when outside the event report allowed area, or if no target indication information is received, the UE does not perform event reporting (that is., step 819 is absent);
(5) if the target indication information received in step 813 indicates the UE to perform event reporting when outside the event report allowed area, and if the strategy is received in step 813, the UE performs conditional event reporting based on the strategy when outside the event report allowed area;
(6) if the target indication information received in step 813 indicates the UE to perform event reporting when outside the event report allowed area, but no strategy is received in step 813, the UE does not perform event reporting outside the event report allowed area, or the UE performs event reporting based on implementation.
(7) if the power saving class indicates "high level", the UE does not perform reporting (that is, step 819 is absent);
(8) if the power saving class indicates "medium level", and strategy is received in step 813, the UE performs conditional event reporting based on the strategy when outside the event report allowed area and within the power saving area;
(9) if the power saving class indicates "low level", and strategy is received in step 813, the UE performs conditional event reporting based on the strategy when outside the event report allowed area; and
(10) if the power saving class indicates "medium level or low level", but no strategy is received in step 813, the UE does not perform event reporting outside the event report allowed area, or the UE performs event reporting based on implementation.

Here, for the UE performing conditional reporting according to the strategy, for example: in combination with the example in step 86, when the strategy includes two parameters of the maximum reporting count and minimum time interval, the UE, when outside the event report allowed area, must have a time interval for each reporting greater than the minimum time interval, and the reporting count cannot be greater than the maximum reporting count.

Step 819: Perform an event reporting procedure, that is, the same as steps 323 to 330b-2 described above, and details are not repeated here.

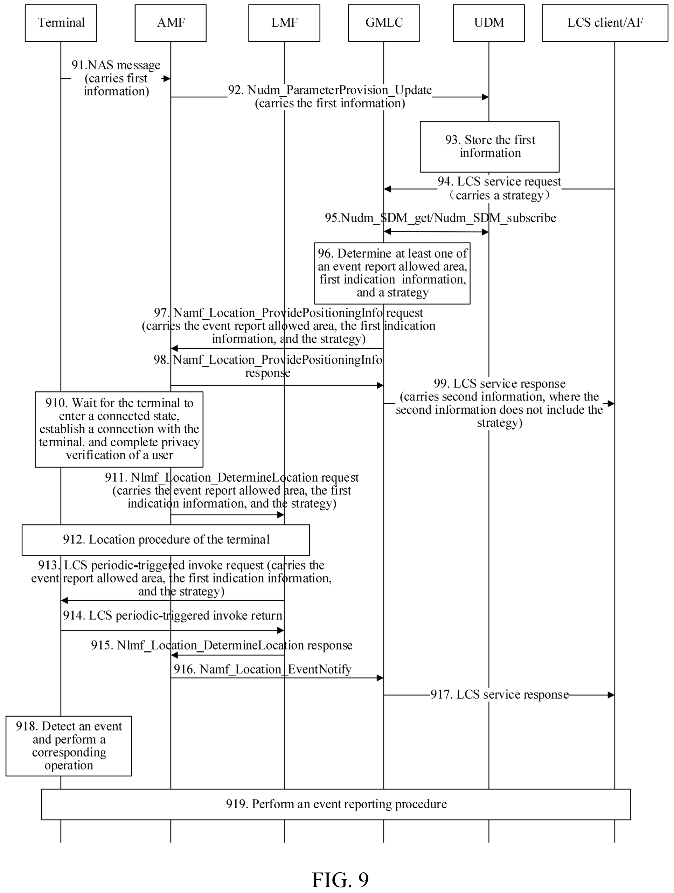

Implementation two: As shown in FIG. 9, it includes the following steps 91 to 919:

Steps 91 to 93 are the same as steps 81 to 83 in implementation one, respectively, and details are not repeated here.

Step 94: An LCS client/AF sends an LCS service request to a GMLC, that is, requests a terminal to perform deferred reporting, where the LCS service request carries a strategy.

Step 95 is the same as step 95 in implementation one, and details are not repeated here.

Step 96: The GMLC performs at least one of the following (1) to (3):
(1) determining an event report allowed area (that is, a first area), for example, based on the power saving area;
(2) determining target indication information, where the target indication information is used for indicating whether the terminal is needed or not to perform event reporting when outside the event report allowed area. In other words, if based on "understanding one", that is, the power saving class in step 81 is a capability, the GMLC determines here whether the terminal is required to report outside the area. If based on "understanding two", that is, the power saving class in step 81 indicates a power saving level of the terminal, the GMLC does not need to determine the target indication information; and
(3) determining a strategy (that is, a reporting policy), used for indicating a constraint for the terminal to perform event reporting when outside the event report allowed area, including at least one of the following parameters (a) to (c):
   (a) a maximum count of reportings (that is, a maximum reporting count of event reportings);
   (b) a minimum reporting time interval (that is, a minimum time interval between two consecutive event reportings); and
   (c) a trigger condition for event reporting, where the trigger condition is used for indicating threshold information other than the minimum time interval and the maximum reporting count; and one implementation method may be: performing event reporting only when a straight-line movement distance reaches a certain threshold (for example, 100 meters).

Here, it should be noted that since the LCS service request in step 95 carries a strategy, if a power saving class indicates that the terminal supports performing event reporting when outside the event report allowed area, or indicates the terminal to perform event reporting when outside the event report allowed area, or indicates "medium level or low level", in step 96, the GMLC may use the strategy carried in the LCS service request as a strategy to be sent to the UE (that is, in this case, the GMLC does not need to determine a strategy in step 96), or select some constraints (that is, parameters) included in the strategy carried in the LCS service request as constraints (that is, parameters) of the strategy to be sent to the UE.

Steps 97 to 98 are the same as steps 87 to 88 in implementation one, respectively, and details are not repeated here.

Step 99: The GMLC sends second information to the LCS client/AF, where the second information includes at least one of the following (1) to (5):
(1) an event report allowed area (that is, determined by the GMLC in step 86);
(2) the power saving class;
(4) an area usage indication; and
(5) a target area error indication.

That is, in implementation two, as compared with step 89 in implementation one, the second information sent by the GMLC to the LCS client/AF in step 99 does not include a strategy.

Steps 99 to 919 are the same as steps 89 to 819 in implementation one, respectively, and details are not repeated here.

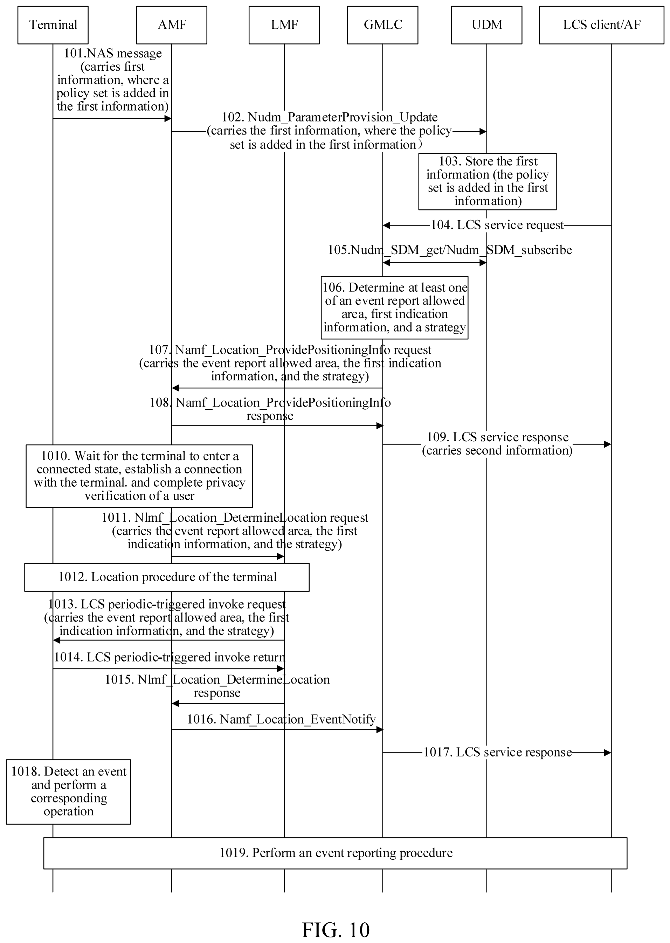

Implementation three: As shown in FIG. 10, it includes the following steps 101 to 1019:

Step 101: A terminal sends NAS signaling to an AMF, where the NAS signaling carries first information, and the first information includes at least one of the following items (1) to (5):
(1) a UE ID (that is, terminal identifier);
(2) a message type;
(3) a power saving area;
(4) a power saving class; and
(5) a policy set, where the policy set includes at least one candidate strategy, where different strategies in the policy set are applicable to different location service types, and a GMLC may subsequently select an appropriate strategy from the policy set based on different services.

Step 102: The AMF sends Nudm_ParameterProvision_Update to a UDM, where the Nudm_ParameterProvision_Update carries the above first information (that is, information such as the UE ID, power saving area, power saving class, area usage indication, and policy set).

Step 103: The UDM stores the received first information (that is, stores the power saving area, power saving class, area usage indication, and policy set of the UE ID).

Step 104 is the same as step 84 in implementation one, and details are not repeated here.

Step 105: The GMLC sends an Nudm_SDM_get or Nudm_SDM_subscribe message to the UDM to query location-related subscription information of the UE ID, acquire the first information (that is, information such as the power saving area, power saving class, area usage indication, and policy set), and save it.

Step 106: The GMLC performs at least one of the following (1) to (3):
(1) determining an event report allowed area (that is, a first area), for example, based on the power saving area;
(2) determining target indication information, where the target indication information is used for indicating whether the terminal is needed or not to perform event reporting when outside the event report allowed area. In other words, if based on "understanding one", that is, the power saving class in step 81 is a capability, the GMLC determines here whether the terminal is required to report outside the area. If based on "understanding two", that is, the power saving class in step 81 indicates a power saving level of the terminal, the GMLC does not need to determine the target indication information; and
(3) determining a strategy (that is, a reporting policy), used for indicating a constraint for the terminal to perform event reporting when outside the event report allowed area, including at least one of the following parameters (a) to (c):
   (a) a maximum count of reportings (that is, a maximum reporting count of event reportings);
   (b) a minimum reporting time interval (that is, a minimum time interval between two consecutive event reportings); and
   (c) a trigger condition for event reporting, where the trigger condition is used for indicating threshold information other than the minimum time interval and the maximum reporting count; and one implementation method may be: performing event reporting only when a straight-line movement distance reaches a certain threshold (for example, 100 meters).

It should be noted that if the power saving class indicates that the terminal supports performing event reporting when outside the event report allowed area, or indicates the terminal to perform event reporting when outside the event report allowed area, or indicates "medium level or low level", in step 106, the GMLC may select a candidate strategy from the policy set based on network selection, the type of LCS client (area, periodic or motion), location related subscription information of the terminal acquired in step 105, or the like, and then determine a strategy to be sent to the UE based on the selected candidate strategy.

Steps 107 to 1019 are the same as steps 87 to 819 in implementation one, respectively, and details are not repeated here.

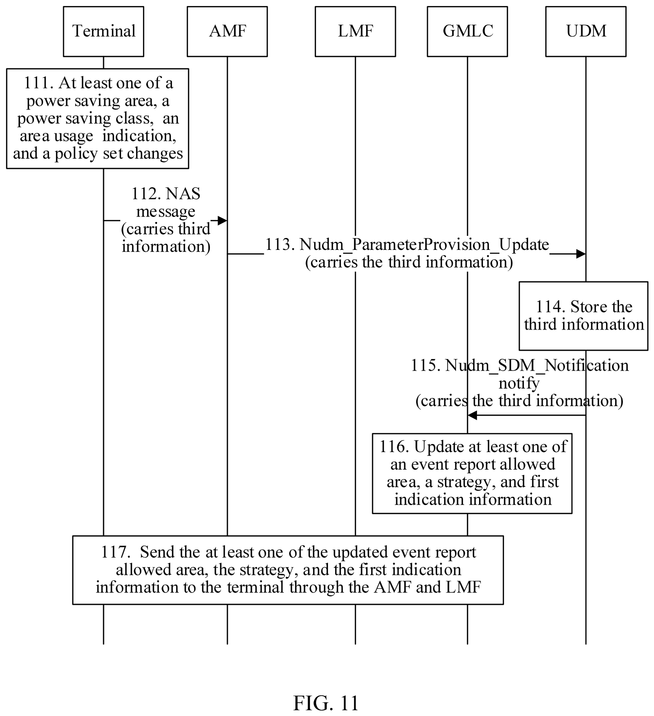

Implementation four: As shown in FIG. 11, it includes the following steps 111 to 116:

Step 111: The first information of the terminal changes, that is, at least one of the power saving area, the power saving class, the area usage indication, and the policy set of the terminal changes.

Step 112: The terminal sends an NAS message to the AMF, carrying third information, where the third information includes at least one of the following items that has changed:
(1) the power saving area;
(2) the power saving class;
(3) the area usage indication; and
(4) the policy set.

The terminal may carry the third information in 5GMM capability information, and encapsulate the 5GMM capability information in a registration request (registration request) message, thereby sending the registration request to the AMF.

Alternatively, the terminal may encapsulate the third information as a new IE in a registration request message, thereby sending the registration request to the AMF.

Alternatively, the terminal may send the third information to the AMF through a terminal location privacy setting request (UE Location Privacy Setting Request) message.

Alternatively, the terminal may send the third information to the AMF through an uplink non-access stratum transport (UL NAS TRANSPORT) message.

Step 113: The AMF sends Nudm_ParameterProvision_Update to the UDM, where the Nudm_ParameterProvision_Update carries the third information (that is, at least one of the power saving area, the power saving class, the area usage indication, and the policy set that has changed).

Step 114: The UDM stores the received third information (that is, stores at least one of the power saving area, the power saving class, the area usage indication, and the policy set that has changed).

Step 115: The UDM provides the third information (that is, at least one of the power saving area, the power saving class, the area usage indication, and the policy set that has changed) to the GMLC.

That is, if the GMLC subscribed to the terminal's information in step 85 of implementation one, in this step, the UDM provides updated information such as the power saving area, the power saving class, the area usage indication, and the policy set to the GMLC.

Step 116: The GMLC updates at least one of the following based on the updated power saving area, power saving class, area usage indication, and policy set, in combination with a target area, a current event report allowed area, a current strategy, and a current report status (that is, report status, such as the reporting count so far and a reporting duration):
(1) an event report allowed area,
(2) a strategy (that is, a strategy to be sent to the UE); and
(3) first indication information.

Step 117: The GMLC sends at least one of the updated event report allowed area, strategy, or target indication information to the terminal through the AMF and an LMF.

In short, in the embodiments of the present application, the terminal may report its own power saving class and area usage indication to indicate whether the terminal uses the event report allowed area in a forward manner or a reverse manner, and to indicate whether the terminal supports performing conditional reporting when outside the event allowed area. Further, the terminal may alternatively provide a policy set, and the GMLC selects a candidate reporting policy from the policy set based on a location service, thereby determining the reporting policy to be sent to the terminal. Alternatively, the LCS client/AF may directly provide the reporting policy. Alternatively, when neither the terminal nor the LCS client/AF provides it, the GMLC determines the reporting policy to be sent to the terminal on its own.

In addition, the terminal may alternatively update its own power saving class, policy set, area usage indication, and store them in the UDM, so that the GMLC may update the terminal's action outside the area based on the updated information.

In short, in the embodiments of the present application, by setting different power saving classes and reporting policies, the issue of whether and how the terminal performs event reporting outside the event report allowed area is addressed, and by indicating the area usage indication, the issue of whether to use the area in a reverse manner is resolved.

The event reporting method provided in the embodiments of the present application may be performed by an event reporting apparatus. In the embodiments of the present application, the event reporting apparatus performing the event reporting method is taken as an example to describe the event reporting apparatus provided in the embodiments of the present application.

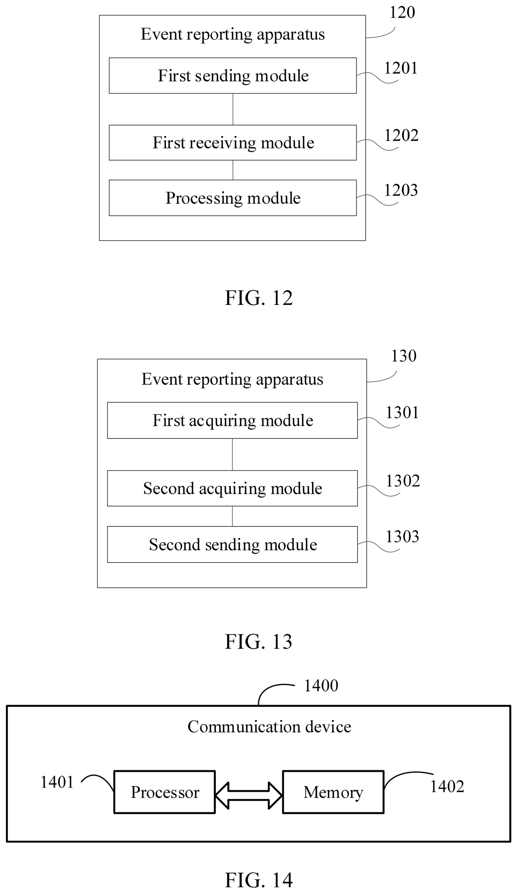

According to a fifth aspect, an embodiment of the present application provides an event reporting apparatus, which may be applied to a terminal. As shown in FIG. 12, the event reporting apparatus 120 includes:
a first sending module 1201 configured to send first information, where the first information is used for indicating information related to a terminal performing event reporting outside a first area, the first area being an area in which the terminal is allowed to perform event reporting;
a first receiving module 1202 configured to receive event reporting configuration information matching the first information; and
a first processing module 1203 configured to perform event reporting based on the event reporting configuration information.

Optionally, the first information includes at least one of the following:
a second area, where the second area is used for indicating an area in which event reporting is expected to perform by the terminal;
a reporting indication, where the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, where the area usage indication is used for indicating forward usage of the first area or reverse usage of the first area.

Optionally, the event reporting configuration information includes at least one of the following:
target indication information, where the target indication information is used for indicating whether the terminal is needed or not to perform event reporting when outside the first area; and
a reporting policy, where the reporting policy is used for indicating at least one constraint for the terminal to perform event reporting.

Optionally, the first processing module 1203 performing event reporting based on the event reporting configuration information is specifically configured to:
in a case that the event reporting configuration information includes the target indication information, and the target indication information indicates that the terminal is not needed to perform event reporting when outside the first area, skip performing event reporting when outside the first area;
in a case that the event reporting configuration information includes the target indication information and the reporting policy, and the target indication information indicates that the terminal is needed to perform event reporting when outside the first area, perform event reporting based on the reporting policy when outside the first area;
in a case that the event reporting configuration information includes the target indication information, the reporting configuration information does not include the reporting policy, and the target indication information indicates that the terminal is needed to perform event reporting when outside the first area, skip performing event reporting when outside the first area, or perform event reporting based on implementation when outside the first area;
in a case that the first information includes the reporting indication, and the reporting indication indicates that event reporting is not to be performed when outside the first area, skip performing event reporting when outside the first area;
in a case that the first information includes the reporting indication, the reporting indication indicates that event reporting is to be performed when outside the first area, and the event reporting configuration information includes the reporting policy, perform event reporting based on the reporting policy when outside the first area;
in a case that the first information includes the reporting indication, the reporting indication indicates that event reporting is to be performed when outside the first area, and the event reporting configuration information does not include the reporting policy, skip performing event reporting when outside the first area, or perform event reporting based on implementation when outside the first area;
in a case that the first information includes the reporting indication, and the reporting indication indicates a first level, and the event reporting configuration information does not include the reporting policy, skip performing event reporting when outside the first area;
in a case that the first information includes the reporting indication, and the reporting indication indicates a second level, and the event reporting configuration information includes the reporting policy, perform event reporting based on the reporting policy when outside the first area and within a second area;
in a case that the first information includes the reporting indication, and the reporting indication indicates a third level, and the event reporting configuration information includes the reporting policy, perform event reporting based on the reporting policy when outside the first area;
in a case that the first information includes the reporting indication, and the reporting indication indicates the second level or the third level, and the event reporting configuration information does not include the reporting policy, skip performing event reporting when outside the first area, or perform event reporting based on implementation when outside the first area.

Optionally, the reporting policy includes at least one of the following:
a maximum reporting count of event reportings;
a minimum time interval between two consecutive event reportings; and
a trigger condition for event reporting, where the trigger condition is used for indicating threshold information other than the minimum time interval and the maximum reporting count.

Optionally, the first processing module 1203 performing event reporting based on the reporting policy is specifically configured to:
perform conditional event reporting based on at least one of the maximum reporting count, the minimum time interval, and the trigger condition.

Optionally, the first information further includes a policy set, where the policy set includes at least one candidate reporting policy, and the reporting policy included in the event reporting configuration information is determined based on one candidate reporting policy in the policy set.

Optionally, the apparatus further includes:
a third sending module configured to, in a case that at least one piece of information included in the first information changes, send third information, where the third information includes the information that has changed in the first information.

Optionally, the apparatus further includes:
a second receiving module configured to receive fourth information, where the fourth information includes at least one of the first area and the event reporting configuration information, the fourth information being determined based on the third information; and
a second processing module configured to perform event reporting based on the fourth information.

Optionally, the first sending module is specifically configured to:
send a target message, where the target message carries the first information; where
the target message includes at least one of the following:
   a registration request message;
   a location privacy setting request message; and
   an uplink non-access stratum transport message.

The event reporting apparatus in the embodiments of the present application may be an electronic device, for example, an electronic device with an operating system, or a component in an electronic device, such as an integrated circuit or a chip. The electronic device may be a terminal, and for example, the terminal may include but is not limited to the types of terminal 11 listed above, which is not specifically limited in the embodiments of the present application.

The event reporting apparatus provided in the embodiments of the present application can implement each process implemented by the method embodiment shown in FIG. 4 and achieve the same technical effects. To avoid repetition, details are not repeated here.

According to a sixth aspect, an embodiment of the present application provides an event reporting apparatus, which may be applied to a first network-side device. As shown in FIG. 13, the event reporting apparatus 130 includes the following modules:
a first acquiring module 1301 configured to acquire first information of a terminal, where the first information is used for indicating related information about the terminal performing event reporting outside a first area, the first area being an area in which the terminal is allowed to perform event reporting;
a second acquiring module 1302 configured to acquire event reporting configuration information matching the first information; and
a second sending module 1303 configured to send the reporting configuration information to the terminal.

Optionally, the first information includes at least one of the following:
a second area, where the second area is used for indicating an area in which event reporting is expected to perform by the terminal;
a reporting indication, where the reporting indication is used for indicating whether the terminal supports performing event reporting when outside the first area, or indicating whether the terminal performs event reporting when outside the first area, or indicating a level related to the terminal performing event reporting when outside the first area; and
an area usage indication, where the area usage indication is used for indicating forward usage of the first area or reverse usage of the first area.

Optionally, the event reporting configuration information includes at least one of the following:
target indication information, where the target indication information is used for indicating whether the terminal is needed or not to perform event reporting when outside the first area; and
a reporting policy, where the reporting policy is used for indicating at least one constraint for the terminal to perform event reporting.

Optionally, the reporting policy includes at least one of the following:
a maximum reporting count of event reportings;
a minimum time interval between two consecutive event reportings; and
a trigger condition for event reporting, where the trigger condition is used for indicating threshold information other than the minimum time interval and the maximum reporting count.

Optionally, in a case that the event reporting configuration information includes the reporting policy, the second acquiring module 1302 is specifically configured to:
in a case that a reporting indication indicates that the terminal supports performing event reporting when outside the first area, or indicates the terminal to perform event reporting when outside the first area, or indicates a second level or a third level, determine the event reporting configuration information based on a location service type and location related subscription information of the terminal;
   or,
in a case that the reporting indication indicates that the terminal supports performing event reporting when outside the first area, or indicates the terminal to perform event reporting when outside the first area, or indicates the second level or the third level, determine the event reporting configuration information based on a reporting policy received from a fourth network-side device;
   or,
in a case that the first information further includes a policy set, and the reporting indication indicates that the terminal supports performing event reporting when outside the first area, or indicates the terminal to perform event reporting when outside the first area, or indicates the second level or the third level, select a candidate reporting policy from the policy set based on a location service type, and determine the event reporting configuration information based on the selected candidate reporting policy, where the policy set includes at least one candidate reporting policy.

Optionally, the process of the second acquiring module 1302 receiving the reporting policy sent by the fourth network-side device includes:
receiving a location service request sent by the fourth network-side device, where the location service request carries the reporting policy.

Optionally, the second sending module 1303 is specifically configured to:
send the event reporting configuration information to the terminal through a third network-side device and a fifth network-side device.

Optionally, the apparatus further includes:
a fourth sending module configured to send second information to a fourth network-side device, where the second information includes at least one of the following:
   the first area;
   a reporting indication, where the reporting indication is used for indicating whether the terminal supports performing event reporting when outside the first area, or indicating whether the terminal performs event reporting when outside the first area;
   the event reporting configuration information;
   an area usage indication, where the area usage indication is used for indicating forward usage of the first area or reverse usage of the first area; and
   a target area error cause, where the target area error cause is used for indicating that there is no overlapping area between a target area and a second area or that the target area has a logical error, the target area being an area in which the terminal is expected to perform event reporting, and the second area being used for indicating an area in which event reporting is expected to perform by the terminal.

Optionally, the first acquiring module 1301 is specifically configured to:
acquire the first information from a second network-side device, where the first information stored in the second network-side device is sent by the terminal to the second network-side device through a third network-side device.

Optionally, the apparatus further includes:
a third acquiring module configured to, in a case that the first network-side device has subscribed to information of the terminal, acquire third information provided by a second network-side device, where the third information includes information that has changed in the first information, and the third information stored in the second network-side device is sent by the terminal to the second network-side device through a third network-side device.

Optionally, the apparatus further includes:
an updating module configured to update fourth information based on the third information, where the fourth information includes at least one of the first area and the event reporting configuration information; and
a fifth sending module configured to send the updated fourth information to the terminal.

The event reporting apparatus in the embodiments of the present application may be an electronic device, for example, an electronic device with an operating system, or a component in an electronic device, such as an integrated circuit or a chip. The electronic device may be a network-side device, and for example, the network-side device may include but is not limited to the types of network-side device 12 listed above, which is not specifically limited in the embodiments of the present application.

The event reporting apparatus provided in the embodiments of the present application can implement each process implemented by the method embodiment shown in FIG. 7 and achieve the same technical effects. To avoid repetition, details are not repeated here.

According to a seventh aspect, an embodiment of the present application provides an event reporting apparatus, which may be applied to a fourth network-side device. The event reporting apparatus may include the following module:
a sixth sending module configured to send a reporting policy to a first network-side device, where the reporting policy is used for indicating at least one constraint for a terminal to perform event reporting.

Optionally, the sixth sending module is specifically configured to send a location service request to the first network-side device, where the location service request carries the reporting policy.

Optionally, the apparatus further includes:
a third receiving module configured to receive second information sent by the first network-side device, where the second information includes at least one of the following:
the first area;
a reporting indication, where the reporting indication is used for indicating whether the terminal supports performing event reporting when outside the first area, or indicating whether the terminal performs event reporting when outside the first area;
the event reporting configuration information;
an area usage indication, where the area usage indication is used for indicating forward usage of the first area or reverse usage of the first area; and
a target area error cause, where the target area error cause is used for indicating that there is no overlapping area between a target area and a second area or that the target area has a logical error, the target area being an area in which the terminal is expected to perform event reporting, and the second area being used for indicating an area in which event reporting is expected to perform by the terminal.

The event reporting apparatus in the embodiments of the present application may be an electronic device, for example, an electronic device with an operating system, or a component in an electronic device, such as an integrated circuit or a chip. The electronic device may be a network-side device, and for example, the network-side device may include but is not limited to the types of network-side device 12 listed above, which is not specifically limited in the embodiments of the present application.

The event reporting apparatus provided in the embodiments of the present application can implement each process implemented by the method embodiment of the third aspect and achieve the same technical effects. To avoid repetition, details are not repeated here.

According to an eighth aspect, an embodiment of the present application further provides an event reporting apparatus, which may be applied to a second network-side device. The event reporting apparatus may include the following modules:
a fourth acquiring module configured to acquire first information of a terminal and store the first information; and
a first providing module configured to provide the first information to a first network-side device.

Optionally, the first information includes at least one of the following:
a second area, where the second area is used for indicating an area in which event reporting is expected to perform by the terminal;
a reporting indication, where the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, where the area usage indication is used for indicating forward usage of the first area or reverse usage of the first area.

Optionally, the apparatus further includes:
a fourth receiving module configured to receive third information sent by the first terminal and store the third information, where the third information includes information that has changed in the first information; and
a second providing module configured to provide the third information to the first network-side device.

The event reporting apparatus in the embodiments of the present application may be an electronic device, for example, an electronic device with an operating system, or a component in an electronic device, such as an integrated circuit or a chip. The electronic device may be a network-side device, and for example, the network-side device may include but is not limited to the types of network-side device 12 listed above, which is not specifically limited in the embodiments of the present application.

The event reporting apparatus provided in the embodiments of the present application can implement each process implemented by the method embodiment of the fourth aspect and achieve the same technical effects. To avoid repetition, details are not repeated here.

As shown in FIG. 14, an embodiment of the present application further provides a communication device 1400, including a processor 1401 and a memory 1402. The memory 1402 stores a program or an instruction capable of running on the processor 1401. For example, when the communication device 1400 is a terminal, when the program or instruction is executed by the processor 1401, each step of the above event reporting method embodiment is implemented, with the same technical effects achieved. When the communication device 1400 is a network-side device, when the program or instruction is executed by the processor 1401, each step of the above event reporting method embodiment is implemented, with the same technical effects achieved. To avoid repetition, details are not repeated here.

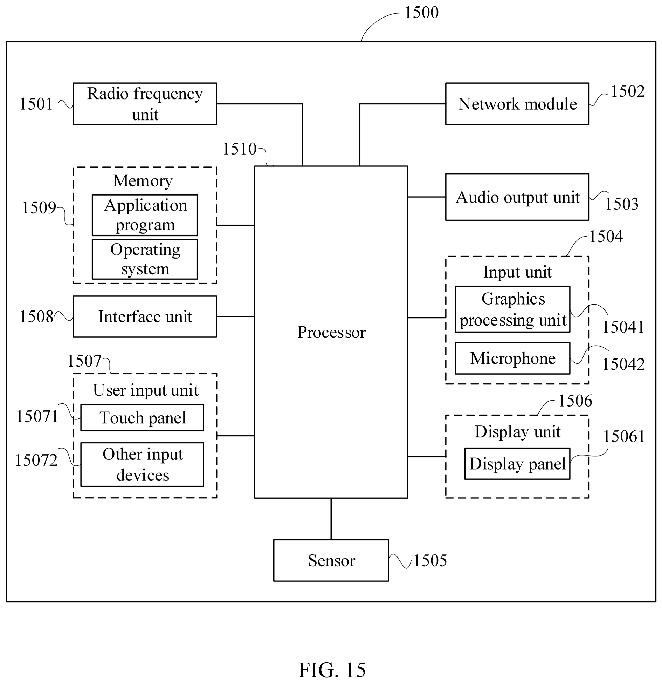

An embodiment of the present application further provides a terminal, including a processor and a communication interface, where the communication interface is coupled to the processor, and the processor is configured to run a program or an instruction to implement the steps in the method embodiment shown in FIG. 4. This terminal embodiment corresponds to the above terminal-side method embodiment, and each implementation process and implementation manner of the above method embodiment can be applied to this terminal embodiment, with the same technical effects achieved. Specifically, FIG. 15 is a schematic diagram of a hardware structure of a terminal implementing an embodiment of the present application.

The terminal 1500 includes but is not limited to: at least some components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

Those skilled in the art can understand that the terminal 1500 may further include a power source (such as a battery) supplying power to each component, and the power source may be logically connected to the processor 1510 through a power management system, thereby implementing functions such as managing charging, discharging, and power consumption through the power management system. The terminal structure shown in FIG. 15 does not constitute a limitation on the terminal, and the terminal may include more or fewer components than shown, or combine certain components, or have a different component arrangement, which is not repeated here.

It should be understood that, in the embodiments of the present application, the input unit 1504 may include a graphics processing unit (Graphics Processing Unit, GPU) 15041 and a microphone 15042. The graphics processor 15041 processes image data of static pictures or videos obtained by an image capture apparatus (such as a camera) in a video capture mode or an image capture mode. The display unit 1506 may include a display panel 15061, and the display panel 15061 may be configured in the form of a liquid crystal display, an organic light-emitting diode, or the like. The user input unit 1507 includes at least one of a touch panel 15071 or other input devices 15072. The touch panel 15071 is also referred to as a touchscreen. The touch panel 15071 may include two parts: a touch detection apparatus and a touch controller. The other input devices 15072 may include but are not limited to a physical keyboard, function keys (such as volume control keys, and switch keys), a trackball, a mouse, and a joystick, which are not repeated here.

In the embodiments of the present application, after receiving downlink data from a network-side device, the radio frequency unit 1501 may transmit it to the processor 1510 for processing. In addition, the radio frequency unit 1501 may send uplink data to the network-side device. Typically, the radio frequency unit 1501 includes but is not limited to an antenna, an amplifier, a transceiver, a coupler, a low noise amplifier, a duplexer, and the like.

The memory 1509 may be used to store software a program or an instruction and various data. The memory 1509 may mainly include a first storage area for storing a program or an instruction and a second storage area for storing data, where the first storage area may store an operating system, applications or instructions required for at least one function (such as a sound playback function, an image playback function, and the like), and the like. Further, the memory 1509 may include a volatile memory or a non-volatile memory 15. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1509 in the embodiments of the present application includes but is not limited to these and any other suitable types of memory.

The processor 1510 may include one or more processing units. Optionally, the processor 1510 integrates an application processor and a modem processor, where the application processor mainly handles operations involving an operating system, a user interface, an application program, and the like, and the modem processor mainly handles wireless communication signals, such as a baseband processor. It can be understood that the modem processor may not be integrated into the processor 1510.

The radio frequency unit 1501 is configured to send first information by the terminal, where the first information is used for indicating related information about the terminal performing event reporting outside a first area, the first area being an area in which the terminal is allowed to perform event reporting;

The radio frequency unit 1501 is further configured to receive event reporting configuration information matching the first information;

The processor 1510 is configured to perform event reporting based on the event reporting configuration information.

Optionally, the first information includes at least one of the following:
a second area, where the second area is used for indicating an area in which event reporting is expected to perform by the terminal;
a reporting indication, where the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, where the area usage indication is used for indicating forward usage of the first area or reverse usage of the first area.

Optionally, the event reporting configuration information includes at least one of the following:
target indication information, where the target indication information is used for indicating whether the terminal is needed or not to perform event reporting when outside the first area; and
a reporting policy, where the reporting policy is used for indicating at least one constraint for the terminal to perform event reporting.

Optionally, the processor 1510 performing event reporting based on the event reporting configuration information includes:
in a case that the event reporting configuration information includes the target indication information, and the target indication information indicates that the terminal is not needed to perform event reporting when outside the first area, skipping performing event reporting when outside the first area;
in a case that the event reporting configuration information includes the target indication information and the reporting policy, and the target indication information indicates that the terminal is needed to perform event reporting when outside the first area, performing event reporting based on the reporting policy when outside the first area;
in a case that the event reporting configuration information includes the target indication information, the reporting configuration information does not include the reporting policy, and the target indication information indicates that the terminal is needed to perform event reporting when outside the first area, skipping performing event reporting when outside the first area, or performing event reporting based on implementation when outside the first area;
in a case that the first information includes the reporting indication, and the reporting indication indicates that event reporting is not to be performed when outside the first area, skipping performing event reporting when outside the first area;
in a case that the first information includes the reporting indication, the reporting indication indicates that event reporting is to be performed when outside the first area, and the event reporting configuration information includes the reporting policy, performing event reporting based on the reporting policy when outside the first area;
in a case that the first information includes the reporting indication, the reporting indication indicates that event reporting is to be performed when outside the first area, and the event reporting configuration information does not include the reporting policy, skipping performing event reporting when outside the first area, or performing event reporting based on implementation when outside the first area;
in a case that the first information includes the reporting indication, and the reporting indication indicates a first level, and the event reporting configuration information does not include the reporting policy, skipping performing event reporting when outside the first area;
in a case that the first information includes the reporting indication, and the reporting indication indicates a second level, and the event reporting configuration information includes the reporting policy, performing event reporting based on the reporting policy when outside the first area and within a second area;
in a case that the first information includes the reporting indication, and the reporting indication indicates a third level, and the event reporting configuration information includes the reporting policy, performing event reporting based on the reporting policy when outside the first area; and
in a case that the first information includes the reporting indication, and the reporting indication indicates the second level or the third level, and the event reporting configuration information does not include the reporting policy, skipping performing event reporting when outside the first area, or performing event reporting based on implementation when outside the first area.

Optionally, the reporting policy includes at least one of the following:
a maximum reporting count of event reportings;
a minimum time interval between two consecutive event reportings; and
a trigger condition for event reporting, where the trigger condition is used for indicating threshold information other than the minimum time interval and the maximum reporting count.

Optionally, the processor 1510 performing event reporting based on the reporting policy includes:
performing conditional event reporting based on at least one of the maximum reporting count, the minimum time interval, and the trigger condition.

Optionally, the first information further includes a policy set, where the policy set includes at least one candidate reporting policy, and the reporting policy included in the event reporting configuration information is determined based on one candidate reporting policy in the policy set.

Optionally, the radio frequency unit 1501 is further configured to:
in a case that at least one piece of information included in the first information changes, send third information, where the third information includes the information that has changed in the first information.

Optionally, the radio frequency unit 1501 is further configured to:
receive fourth information, where the fourth information includes at least one of the first area and the event reporting configuration information, the fourth information being determined based on the third information;

The processor 1510 is further configured to perform event reporting based on the fourth information.

Optionally, the radio frequency unit 1501 sending first information includes:
sending a target message, where the target message carries the first information; where
the target message includes at least one of the following:
   a registration request message;
   a location privacy setting request message; and
   an uplink non-access stratum transport message.

It can be understood that for the implementation processes of the implementations mentioned in this embodiment, reference can be made to the relevant descriptions of the event reporting method in the method embodiments, with the same or corresponding technical effects achieved. To avoid repetition, details are not repeated here.

An embodiment of the present application further provides a network-side device, including a processor and a communication interface, where the communication interface is coupled to the processor, and the processor is configured to run a program or an instruction to implement the steps of the method embodiments according to the second aspect or the third aspect or the fourth aspect. This network-side device embodiment corresponds to the above network-side device method embodiment, and each implementation process and implementation manner of the above method embodiment can be applied to this network-side device embodiment, with the same technical effects achieved.

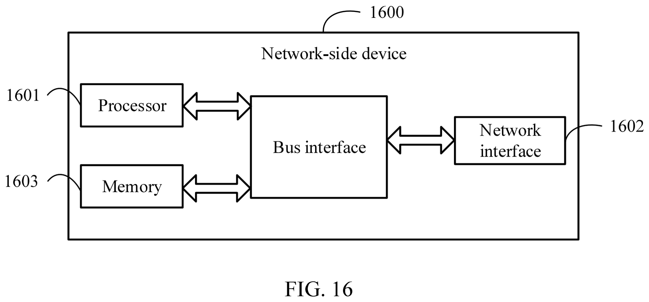

Specifically, an embodiment of the present application further provides a network-side device. As shown in FIG. 16, the network-side device 1600 includes: a processor 1601, a network interface 1602, and a memory 1603. The network interface 1602 is, for example, a common public radio interface (common public radio interface, CPRI).

Specifically, the network-side device 1600 of the embodiment of the present invention further includes: an instruction or a program stored on the memory 1603 and capable of running on the processor 1601. The processor 1601 calls the instruction or program in the memory 1603 to perform the method according to the foregoing second aspect or third aspect or fourth aspect, with the same technical effects achieved. To avoid repetition, details are not repeated here.

An embodiment of the present application further provides a readable storage medium, where the readable storage medium stores a program or an instruction, and when the program or instruction is executed by a processor, each process of the above event reporting method embodiment is implemented, with the same technical effects achieved. To avoid repetition, details are not repeated here.

The processor is the processor in the terminal described in the above embodiment. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of the present application further provides a chip, where the chip includes a processor and a communication interface, the communication interface is coupled to the processor, and the processor is configured to run a program or an instruction to implement each process of the above event reporting method embodiment, with the same technical effects achieved. To avoid repetition, details are not repeated here.

It should be understood that the chip mentioned in the embodiment of the present application may also be referred to as a system-level chip, a system chip, a chip system, a system-on-chip chip, or the like.

An embodiment of the present application further provides a computer program/program product, where the computer program/program product is stored in a storage medium, and the computer program/program product is executed by at least one processor to implement each process of the above event reporting method embodiment, with the same technical effects achieved. To avoid repetition, details are not repeated here.

An embodiment of the present application further provides a wireless communication system, including: a terminal and a first network-side device, where the terminal may be configured to perform the steps of the event reporting method according to the first aspect as described above, and the first network-side device may be configured to perform the steps of the event reporting method according to the second aspect as described above. Further, the wireless communication system further includes a fourth network-side device and a second network-side device, where the fourth network-side device may be configured to perform the steps of the event reporting method according to the third aspect as described above, and the second network-side device may be configured to perform the steps of the event reporting method according to the fourth aspect as described above.

It should be noted that, in this document, the terms "include", "comprise", or any other variants thereof are intended to cover non-exclusive inclusion, so that a process, method, article, or apparatus including a series of elements not only includes those elements but also includes other elements not explicitly listed, or also includes elements inherent to such process, method, article, or apparatus. Without more restrictions, an element defined by the statement "including a..." does not exclude the presence of other identical elements in the process, method, article, or apparatus including the element. In addition, it should be pointed out that the scope of the methods and apparatuses in the embodiments of the present application is not limited to performing functions in the order shown or discussed, but may also include performing functions in a substantially simultaneous manner or in a reverse order according to the functions involved. For example, the described method may be performed in an order different from that described, and various steps may also be added, omitted, or combined. In addition, features described with reference to certain examples may be combined in other examples.

Through the description of the above embodiments, those skilled in the art can clearly understand that the above embodiment methods can be implemented by means of a computer software product plus a necessary general hardware platform, and of course, can also be implemented by hardware. The computer software product is stored in a storage medium (such as an ROM, a RAM, a magnetic disk, or an optical disk) and includes several instructions to cause a terminal or network-side device to perform the methods described in various embodiments of the present application.

The embodiments of the present application have been described above in conjunction with the accompanying drawings, but the present application is not limited to the above specific embodiments; the above specific embodiments are merely illustrative and not restrictive; those of ordinary skill in the art, under the enlightenment of the present application, without departing from the purpose of the present application and the scope protected by the claims, can also make many forms of embodiments, and these embodiments all fall within the protection of the present application.

## Claims

1. An event reporting method, wherein the method comprises:
sending, by a terminal, first information, wherein the first information is used for indicating related information about the terminal performing event reporting outside a first area, the first area being an area in which the terminal is allowed to perform event reporting;
receiving, by the terminal, event reporting configuration information matching the first information; and
performing, by the terminal, event reporting based on the event reporting configuration information.

2. The method according to claim 1, wherein the first information comprises at least one of the following:
a second area, wherein the second area is used for indicating an area in which event reporting is expected to perform by the terminal ;
a reporting indication, wherein the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, wherein the area usage indication is used for indicating forward usage of the first area or reverse usage of the first area.

3. The method according to claim 2, wherein the reporting indication is a global mutually exclusive setting for the first area.

4. The method according to any one of claims 1 to 3, wherein the first area is determined based on the second area.

5. The method according to any one of claims 1 to 4, wherein the event reporting configuration information comprises at least one of the following:
target indication information, wherein the target indication information is used for indicating whether the terminal is needed or not to perform event reporting when outside the first area; and
a reporting policy, wherein the reporting policy is used for indicating at least one constraint for the terminal to perform event reporting.

6. The method according to claim 5, wherein the performing, by the terminal, event reporting based on the event reporting configuration information comprises at least one of the following:
in a case that the event reporting configuration information comprises the target indication information, and the target indication information indicates that the terminal is not needed to perform event reporting when outside the first area, skipping, by the terminal, performing event reporting when outside the first area;
in a case that the event reporting configuration information comprises the target indication information and the reporting policy, and the target indication information indicates that the terminal is needed to perform event reporting when outside the first area, performing, by the terminal, event reporting based on the reporting policy when outside the first area;
in a case that the event reporting configuration information comprises the target indication information, the reporting configuration information does not comprise the reporting policy, and the target indication information indicates that the terminal is needed to perform event reporting when outside the first area, skipping, by the terminal, performing event reporting when outside the first area, or performing, by the terminal, event reporting based on implementation when outside the first area;
in a case that the first information comprises the reporting indication, and the reporting indication indicates that event reporting is not to be performed when outside the first area, skipping, by the terminal, performing event reporting when outside the first area;
in a case that the first information comprises the reporting indication, the reporting indication indicates that event reporting is to be performed when outside the first area, and the event reporting configuration information comprises the reporting policy, performing, by the terminal, event reporting based on the reporting policy when outside the first area;
in a case that the first information comprises the reporting indication, the reporting indication indicates that event reporting is to be performed when outside the first area, and the event reporting configuration information does not comprise the reporting policy, skipping, by the terminal, performing event reporting when outside the first area, or performing, by the terminal, event reporting based on implementation when outside the first area;
in a case that the first information comprises the reporting indication, the reporting indication indicates a first level, and the event reporting configuration information does not comprise the reporting policy, skipping, by the terminal, performing event reporting when outside the first area;
in a case that the first information comprises the reporting indication, the reporting indication indicates a second level, and the event reporting configuration information comprises the reporting policy, performing, by the terminal, event reporting based on the reporting policy when outside the first area and within a second area, wherein the second area is used for indicating an area in which event reporting is expected to perform by the terminal;
in a case that the first information comprises the reporting indication, the reporting indication indicates a third level, and the event reporting configuration information comprises the reporting policy, performing, by the terminal, event reporting based on the reporting policy when outside the first area; and
in a case that the first information comprises the reporting indication, the reporting indication indicates the second level or the third level, and the event reporting configuration information does not comprise the reporting policy, skipping, by the terminal, performing event reporting when outside the first area, or performing, by the terminal, event reporting based on implementation when outside the first area.

7. The method according to claim 5 or 6, wherein the reporting policy comprises at least one of the following:
a maximum reporting count of event reportings;
a minimum time interval between two consecutive event reportings; and
a trigger condition for event reporting, wherein the trigger condition is used for indicating threshold information other than the minimum time interval and the maximum reporting count.

8. The method according to claim 7, wherein the performing, by the terminal, event reporting based on the reporting policy comprises:
performing, by the terminal, conditional event reporting based on at least one of the maximum reporting count, the minimum time interval, and the trigger condition.

9. The method according to any one of claims 5 to 8, wherein the first information further comprises a policy set, wherein the policy set comprises at least one candidate reporting policy, and the reporting policy comprised in the event reporting configuration information is determined based on one candidate reporting policy in the policy set.

10. The method according to any one of claims 1 to 9, wherein the method further comprises:
in a case that at least one piece of information comprised in the first information changes, sending, by the terminal, third information, wherein the third information comprises the information that has changed in the first information.

11. The method according to claim 10, wherein the method further comprises:
receiving, by the terminal, fourth information, wherein the fourth information comprises at least one of the first area and the event reporting configuration information, the fourth information being determined based on the third information; and
performing, by the terminal, event reporting based on the fourth information.

12. The method according to any one of claims 1 to 11, wherein the sending, by a terminal, first information comprises:
sending, by the terminal, a target message, wherein the target message carries the first information; wherein
the target message comprises at least one of the following:
a registration request message;
a location privacy setting request message; and
an uplink non-access stratum transport message.

13. An event reporting method, wherein the method comprises:
acquiring, by a first network-side device, first information of a terminal, wherein the first information is used for indicating related information about the terminal performing event reporting outside a first area, the first area being an area in which the terminal is allowed to perform event reporting;
acquiring, by the first network-side device, event reporting configuration information matching the first information; and
sending, by the first network-side device, the reporting configuration information to the terminal.

14. The method according to claim 13, wherein the first information comprises at least one of the following:
a second area, wherein the second area is used for indicating an area in which event reporting is expected to perform by the terminal;
a reporting indication, wherein the reporting indication is used for indicating whether the terminal supports performing event reporting when outside the first area, or indicating whether the terminal performs event reporting when outside the first area, or indicating a level related to the terminal performing event reporting when outside the first area; and
an area usage indication, wherein the area usage indication is used for indicating forward usage of the first area or reverse usage of the first area.

15. The method according to claim 14, wherein the reporting indication is a global mutually exclusive setting for the first area.

16. The method according to any one of claims 13 to 15, wherein the first area is determined based on the second area.

17. The method according to any one of claims 13 to 16, wherein the event reporting configuration information comprises at least one of the following:
target indication information, wherein the target indication information is used for indicating whether the terminal is needed or not to perform event reporting when outside the first area; and
a reporting policy, wherein the reporting policy is used for indicating at least one constraint for the terminal to perform event reporting.

18. The method according to claim 17, wherein the reporting policy comprises at least one of the following:
a maximum reporting count of event reportings;
a minimum time interval between two consecutive event reportings; and
a trigger condition for event reporting, wherein the trigger condition is used for indicating threshold information other than the minimum time interval and the maximum reporting count.

19. The method according to claim 17 or 18, wherein in a case that the event reporting configuration information comprises the reporting policy, the acquiring, by the first network-side device, event reporting configuration information matching the first information comprises at least one of the following:
in a case that a reporting indication indicates that the terminal supports performing event reporting when outside the first area, or indicates the terminal to perform event reporting when outside the first area, or indicates a second level or a third level, determining, by the first network-side device, the event reporting configuration information based on a location service type and location related subscription information of the terminal;
or,
in a case that the reporting indication indicates that the terminal supports performing event reporting when outside the first area, or indicates the terminal to perform event reporting when outside the first area, or indicates the second level or the third level, determining, by the first network-side device, the event reporting configuration information based on a reporting policy received from a fourth network-side device;
or,
in a case that the first information further comprises a policy set, and the reporting indication indicates that the terminal supports performing event reporting when outside the first area, or indicates the terminal to perform event reporting when outside the first area, or indicates the second level or the third level, selecting, by the first network-side device, a candidate reporting policy from the policy set based on a location service type, and determining the event reporting configuration information based on the selected candidate reporting policy, wherein the policy set comprises at least one candidate reporting policy.

20. The method according to claim 19, wherein a process of receiving, by the first network-side device, the reporting policy sent by the fourth network-side device comprises:
receiving, by the first network-side device, a location service request sent by the fourth network-side device, wherein the location service request carries the reporting policy.

21. The method according to any one of claims 13 to 20, wherein the sending, by the first network-side device, the event reporting configuration information to the terminal comprises:
sending, by the first network-side device, the event reporting configuration information to the terminal through a third network-side device and a fifth network-side device.

22. The method according to any one of claims 13 to 21, wherein the method further comprises:
sending, by the first network-side device, second information to a fourth network-side device, wherein the second information comprises at least one of the following:
the first area;
a reporting indication, wherein the reporting indication is used for indicating whether the terminal supports performing event reporting when outside the first area, or indicating whether the terminal performs event reporting when outside the first area;
the event reporting configuration information;
an area usage indication, wherein the area usage indication is used for indicating forward usage of the first area or reverse usage of the first area; and
a target area error cause, wherein the target area error cause is used for indicating that there is no overlapping area between a target area and a second area or that the target area has a logical error, the target area being an area in which the terminal is expected to perform event reporting, and the second area being used for indicating an area in which event reporting is expected to perform by the terminal.

23. The method according to any one of claims 13 to 22, wherein the acquiring, by a first network-side device, first information of a terminal comprises:
acquiring, by the first network-side device, the first information from a second network-side device, wherein the first information stored in the second network-side device is sent by the terminal to the second network-side device through a third network-side device.

24. The method according to any one of claims 13 to 23, wherein the method further comprises:
in a case that the first network-side device has subscribed to information of the terminal, acquiring, by the first network-side device, third information provided by a second network-side device, wherein the third information comprises information that has changed in the first information, and the third information stored in the second network-side device is sent by the terminal to the second network-side device through a third network-side device.

25. The method according to claim 24, wherein the method further comprises:
updating, by the first network-side device, fourth information based on the third information, wherein the fourth information comprises at least one of the first area and the event reporting configuration information; and
sending, by the first network-side device, the updated fourth information to the terminal.

26. An event reporting apparatus, wherein the apparatus comprises:
a first sending module configured to send first information, wherein the first information is used for indicating information related to a terminal performing event reporting outside a first area, the first area being an area in which the terminal is allowed to perform event reporting;
a first receiving module configured to receive event reporting configuration information matching the first information; and
a first processing module configured to perform event reporting based on the event reporting configuration information.

27. The apparatus according to claim 26, wherein the first information comprises at least one of the following:
a second area, wherein the second area is used for indicating an area in which event reporting is expected to perform by the terminal;
a reporting indication, wherein the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, wherein the area usage indication is used for indicating forward usage of the first area or reverse usage of the first area.

28. The apparatus according to claim 27, wherein the reporting indication is a global mutually exclusive setting for the first area.

29. The apparatus according to any one of claims 26 to 28, wherein the first area is determined based on the second area.

30. The apparatus according to any one of claims 26 to 29, wherein the event reporting configuration information comprises at least one of the following:
target indication information, wherein the target indication information is used for indicating whether the terminal is needed or not to perform event reporting when outside the first area; and
a reporting policy, wherein the reporting policy is used for indicating at least one constraint for the terminal to perform event reporting.

31. An event reporting apparatus, wherein the apparatus comprises:
a first acquiring module configured to acquire first information of a terminal, wherein the first information is used for indicating related information about the terminal performing event reporting outside a first area, the first area being an area in which the terminal is allowed to perform event reporting;
a second acquiring module configured to acquire event reporting configuration information matching the first information; and
a second sending module configured to send the reporting configuration information to the terminal.

32. The apparatus according to claim 31, wherein the first information comprises at least one of the following:
a second area, wherein the second area is used for indicating an area in which event reporting is expected to perform by the terminal;
a reporting indication, wherein the reporting indication is used for indicating whether the terminal supports performing event reporting when outside the first area, or indicating whether the terminal performs event reporting when outside the first area, or indicating at least one level related to the terminal performing event reporting when outside the first area; and
an area usage indication, wherein the area usage indication is used for indicating forward usage of the first area or reverse usage of the first area.

33. The apparatus according to claim 32, wherein the reporting indication is a global mutually exclusive setting for the first area.

34. The apparatus according to any one of claims 31 to 33, wherein the first area is determined based on the second area.

35. The apparatus according to any one of claims 31 to 34, wherein the event reporting configuration information comprises at least one of the following:
target indication information, wherein the target indication information is used for indicating whether the terminal is needed or not to perform event reporting when outside the first area; and
a reporting policy, wherein the reporting policy is used for indicating at least one constraint for the terminal to perform event reporting.

36. A terminal, wherein the terminal comprises a processor and a memory, the memory stores a program or an instruction capable of running on the processor, and when the program or instruction is executed by the processor, the steps of the event reporting method according to any one of claims 1 to 12 are implemented.

37. A network-side device, wherein the network-side device comprises a processor and a memory, the memory stores a program or an instruction capable of running on the processor, and when the program or instruction is executed by the processor, the steps of the event reporting method according to any one of claims 13 to 25 are implemented.

38. A readable storage medium, wherein the readable storage medium stores a program or an instruction, and when the program or instruction is executed by a processor, the event reporting method according to any one of claims 1 to 12 or the steps of the event reporting method according to any one of claims 13 to 25 are implemented.
